# EUROPEAN PATENT APPLICATION

(11) **EP 4 757 460 A1**
(43) Date of publication of application: **10.06.2026**
(21) Application number: 24848823.1
(22) Date of filing: 08.07.2024
(51) Int. Cl.: H04W 72/0457, H04W 76/15, H04W 84/12

(54) **INFORMATION PROCESSING DEVICE, INFORMATION PROCESSING METHOD, AND PROGRAM**

(30) Priority: 31.07.2023 JP 2023124983
(71) Applicant: Sony Group Corporation, Tokyo 108-0075 (JP)
(72) Inventor: TANAKA Yusuke, Tokyo 108-0075 (JP); AIO Kosuke, Tokyo 108-0075 (JP)
(74) Representative: D Young & Co LLP
(86) International application number: PCT/JP2024/024532
(87) International publication number: WO 2025/028164

(57) **Abstract**

[Object] To make it possible to use frequency bands effectively.

[Solving Means] An information processing apparatus includes a control section that controls a communication section that performs communication on at least one of a first channel or a second channel, the first channel being used to perform wireless communication, the second channel being used by being bundled with the first channel in order to extend a band used for the wireless communication. In a state in which a right to transmission on the first channel that is acquired by a first wireless communication apparatus that acquires the right to transmission on the first channel and a right to transmission on the second channel, is shared by a second wireless communication apparatus, the control section performs control to perform wireless communication with the first wireless communication apparatus using the second channel in response to receiving first information used to give an instruction to perform communication on the basis of the right to transmission on the second channel.

## Description

### Technical Field

The present disclosure relates to an information processing apparatus, an information processing method, and a program.

### Background Art

Generally, a large bandwidth is used in order to perform high-speed wireless communication. For example, an information processing apparatus that includes a wireless communication controlling function uses a specific 20-MHz band as a primary channel and extends the band by adding a channel to the primary channel (channel bonding). This makes it possible to use a continuous 160-MHz or 320-MHz band. Herein, a band corresponding to an extension portion added to the primary channel is referred to as a secondary channel. On the other hand, when the information processing apparatus detects another communication performed on the primary channel, there is a need to prevent communication from being performed in the entirety of the band including the secondary channel even if the secondary channel is available.

Further, there has been an increasing demand for peer-to-peer (P2P) communication used for direct communication between child devices (non-APs). A technology called TXOP sharing in which a parent device (an AP) that has acquired a right to transmission allocates a period of time for P2P communication to a child device subordinate to the parent device, is known as a method for performing P2P communication (refer to Non-Patent Literature 1).

### Citation List

### Patent Literature

Non-Patent Literature 1: IEEE Std 802.11-2020

### Disclosure of Invention

### Technical Problem

Regarding secondary channel access, Non-Patent Literature 1 discloses a difference between devices in an operation that can be performed due to capability such as the presence or absence of CCA, terminals' presetting of a list of channels to be changed to, an implicit change in channel and an explicit change in channel, and a method for reporting and setting a channel to be changed to. However, Non-Patent Literature 1 assumes that the primary channel is occupied with communication performed in another BSS, and does not take into consideration a method for causing the primary channel to be occupied with P2P communication performed in an own BSS, and a method for accessing a secondary channel that is not used for the P2P communication in the own BSS (a method for performing secondary channel access). This results in being unable to solve an issue about inactiveness of a secondary channel, and thus in being unable to use frequency bands effectively.

Thus, the present disclosure provides an information processing apparatus, an information processing method, and a program that make it possible to use frequency bands effectively.

### Solution to Problem

In order to solve the issues described above, the present disclosure provides an information processing apparatus that includes a control section that controls a communication section that performs communication on at least one of a first channel or a second channel, the first channel being used to perform wireless communication, the second channel being used by being bundled with the first channel in order to extend a band used for the wireless communication. In a state in which a right to transmission on the first channel that is acquired by a first wireless communication apparatus that acquires the right to transmission on the first channel and a right to transmission on the second channel, is shared by a second wireless communication apparatus, the control section performs control to perform wireless communication with the first wireless communication apparatus using the second channel in response to receiving first information used to give an instruction to perform communication on the basis of the right to transmission on the second channel.

### Brief Description of Drawings

[Fig. 1] Fig. 1 illustrates an example of an overall configuration of a wireless communication system according to a first embodiment of the present disclosure.
[Fig. 2] Fig. 2 is a block diagram of a first wireless communication apparatus that includes an information processing apparatus according to the first embodiment of the present disclosure.
[Fig. 3] Fig. 3 is a block diagram of a second wireless communication apparatus that includes the information processing apparatus according to the first embodiment of the present disclosure.
[Fig. 4A] Fig. 4A illustrates a first example of channel extension according to the first embodiment of the present disclosure.
[Fig. 4B] Fig. 4B illustrates a second example of channel extension according to the first embodiment of the present disclosure.
[Fig. 5] Fig. 5 is a diagram of a sequence of secondary channel access according to the first embodiment of the present disclosure.
[Fig. 6A] Fig. 6A illustrates a frame format of an MU-RTS TXS trigger signal.
[Fig. 6B] Fig. 6B illustrates a first example of a configuration of User Info according to the first embodiment of the present disclosure.
[Fig. 6C] Fig. 6C illustrates a configuration of Common Info according to the first embodiment of the present disclosure.
[Fig. 7] Fig. 7 illustrates a second example of the configuration of User Info according to the first embodiment of the present disclosure.
[Fig. 8A] Fig. 8A illustrates a third example of the configuration of User Info according to the first embodiment of the present disclosure.
[Fig. 8B] Fig. 8B illustrates a configuration of Trigger Dependent according to the first embodiment of the present disclosure.
[Fig. 9] Fig. 9 illustrates a format of a trigger frame that includes information regarding secondary channel access.
[Fig. 10] Fig. 10 is a diagram of a sequence of secondary channel access according to a second embodiment of the present disclosure.
[Fig. 11] Fig. 11 illustrates a configuration of User Info according to the second embodiment of the present disclosure.
[Fig. 12] Fig. 12 is a block diagram of an example of a configuration of hardware of a computer that performs a series of processes according to the present embodiment using a program.
[Fig. 13] Fig. 13 is a block diagram of an example of a schematic configuration of a smartphone to which the present embodiment is applied.
[Fig. 14] Fig. 14 is a block diagram of an example of a schematic configuration of an in-vehicle apparatus to which the present embodiment is applied.
[Fig. 15] Fig. 15 is a block diagram of an example of a schematic configuration of a wireless AP to which the present embodiment is applied.

### Mode(s) for Carrying Out the Invention

Embodiments of the present disclosure will now be described in detail below with reference to the drawings. Note that, in the specification and the drawings, structural elements that have substantially the same functional configuration are denoted by the same reference numeral to omit a description thereof as appropriate. Illustrations in the figures are simplified ones, and, in addition to illustrated structural elements, a structural element necessary for implementation is provided properly. Further, when terms such as "first" and "second" are used in the specification or in the claims, those do not indicate any orders or any degrees of importance but are used in order to distinguish a certain structural element from another structural element, unless otherwise specified.

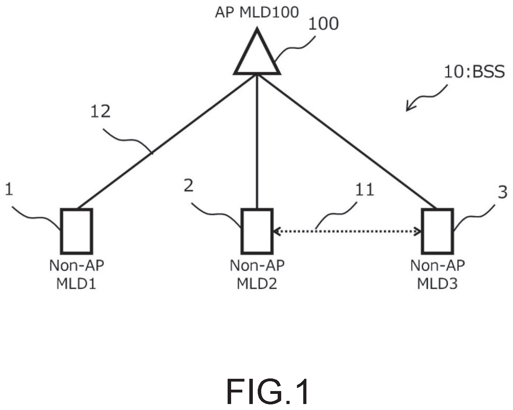

Fig. 1 illustrates an example of an overall configuration of a wireless communication system according to a first embodiment of the present disclosure. The wireless communication system illustrated in Fig. 1 includes a wireless communication apparatus 100, a wireless communication apparatus 1, a wireless communication apparatus 2, and a wireless communication apparatus 3. The wireless communication apparatus 100 corresponds to a base station and is a referred to as a first wireless communication apparatus. Further, the wireless communication apparatuses 1, 2, and 3 correspond to terminals arranged in a footprint (a cell) of the wireless communication apparatus 100 and are also referred to as second wireless communication apparatuses. The wireless communication apparatuses 100, 1, 2, and 3 form a single basic service set (BSS) 10.

The wireless communication apparatus 100 performs a process of distributing, to the wireless communication apparatuses 1, 2, and 3, a right to transmission (transmission opportunity; TXOP) (also referred to as TXOP sharing) to cause a specified frequency band to be occupied for a specified period of time.

The wireless communication apparatus 100 can use, for example, a 5-GHz or 6-GHz band as a specified frequency band. Further, the wireless communication apparatus 100 selects a specified bandwidth such as one 20-MHz frequency band (channel) from a usable frequency band as a primary channel, and can communicate with a subordinate wireless communication apparatus (the wireless communication apparatus 1, 2, or 3 in Fig. 1) on the condition that a right to transmission be acquired on the primary channel. Further, the wireless communication apparatus 100 can also use a channel (an extension channel) obtained by extending the primary channel (a primary channel or a reference channel), on the condition that a right to transmission be acquired on the obtained channel. The extension channel includes the primary channel, and at least one channel (a secondary channel) that is used by being bundled with the primary channel in order to extend a band used for wireless communication. For example, channel bonding is performed to use the primary channel and the secondary channel. The at least one channel may include one 20-MHz frequency band (channel) or a plurality of 20-MHz frequency bands (channels), or may include a channel with a frequency band greater than the 20-MHz frequency band. The wireless communication apparatus 100 can also cause a right to transmission that is acquired for the entirety of or a portion of the frequency band (channel) of the extension channel to be shared or occupied by all of or one of the wireless communication apparatuses 1, 2, and 3. In the example illustrated in Fig. 1, the wireless communication apparatus 100 causes a right to transmission on a channel 11 to be shared by the wireless communication apparatus 2 or the wireless communication apparatus 3 for peer-to-peer (P2P) communication.

The wireless communication apparatus 2 and the wireless communication apparatus 3 obtain, from the wireless communication apparatus 100, a right to transmission on the channel 11 to perform P2P communication. On the other hand, the wireless communication apparatus 1 communicates with the wireless communication apparatus 100 using a channel 12. For example, the channel 11 includes a primary channel, and further includes a portion of a secondary channel. Further, the channel 12 includes a remaining portion of the secondary channel.

Note that, when at least two second wireless communication apparatuses are arranged in one BSS, one of the at least two second wireless communication apparatuses may be referred to as a third wireless communication apparatus. For example, one (for example, the wireless communication apparatus 3) of two second wireless communication apparatuses that obtain, from a first wireless communication apparatus, a right to transmission on a channel including a primary channel to perform P2P communication may be referred to as the third wireless communication apparatus. Further, as opposed to the second wireless communication apparatus obtaining, from the first wireless communication apparatus, a right to transmission on the channel including the primary channel, a second wireless communication apparatus (for example, the wireless communication apparatus 1) that obtains a right to transmission on a channel that does not include the primary channel may be referred to as the third wireless communication apparatus. The channel that does not include the primary channel will be described later.

The wireless communication apparatus 100 is, for example, an access-point multi-link device (AP MLD). The wireless communication apparatuses 1, 2, and 3 are, for example, non-access-point multi-link devices (non-AP MLDs). An example in which the wireless communication apparatuses 100, 1, 2, and 3 are MLDs that support multi-link operation (MLO) is described herein, but the present disclosure is not limited thereto. The wireless communication apparatuses 100, 1, 2, and 3 may be single-link devices (SLDs). Note that, herein, the wireless communication apparatuses 100, 1, 2, and 3 may be respectively referred to as an AP MLD 100, a non-AP MLD 1, a non-AP MLD 2, and a non-AP MLD 3. Further, at least two of or all of the non-AP MLD 1, the non-AP MLD 2, and the non-AP MLD 3 are described collectively in some cases. For example, the non-AP MLD 1, the non-AP MLD 2, and the non-AP MLD 3 are described collectively as a non-AP MLD 1/2/3.

In addition to operations described in the present embodiment, the wireless communication apparatus 100 and the wireless communication apparatus 1, 2, 3 may also operate as a base station and a terminal for a wireless LAN in conformity with the IEEE 802.11 standards such as IEEE 802.11a/b/g/n/ac/ax/be/bn. For example, the wireless communication apparatuses 100, 1, 2, and 3 may operate using carrier-sense multiple access with collision avoidance (CSMA/CA) as a basic access approach, and the wireless communication apparatus 100 may transmit a beacon signal at regular time intervals (periodically).

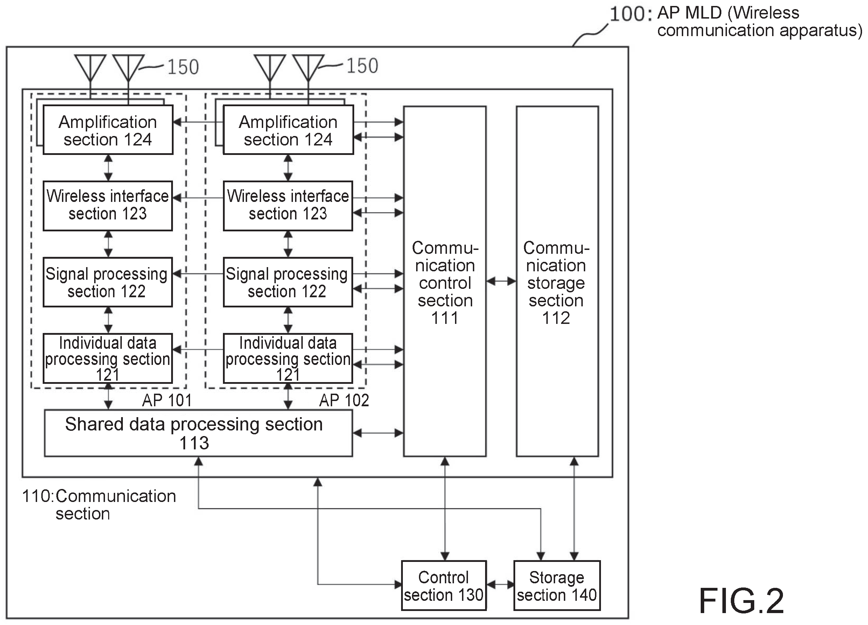

Fig. 2 is a block diagram of the wireless communication apparatus 100 including an information processing apparatus according to the first embodiment of the present disclosure. The information processing apparatus according to the first embodiment of the present disclosure is also referred to as a wireless communication controlling apparatus since the information processing apparatus includes a function to control wireless communication. The information processing apparatus according to the first embodiment of the present disclosure may be implemented as, for example, a semiconductor chip that includes a wireless communication controlling function. Further, the information processing apparatus according to the first embodiment of the present disclosure may be implemented as, for example, a smartphone, personal computer, or in-vehicle apparatus that includes, for example, a screen display function or a user interface in addition to the wireless communication controlling function. The communication apparatus 100 primarily includes a communication section 110, a control section 130, and a storage section 140. The communication section 110 includes a communication control section 111, a communication storage section 112, a shared data processing section 113, an AP 101, and an AP 102. The communication section 110 may be implemented by at least one large-scale integration (LSI).

The APs 101 and 102 are used to perform processes on different transmission lines (also referred to as links). The APs 101 and 102 each include an individual data processing section 121, a signal processing section 122, a wireless interface section 123, at least one amplification section 124, and at least one antenna 150. In other words, a set of the individual data processing section 121, the signal processing section 122, the wireless interface section 123, the amplification section 124, and the antenna 150 is included in the AP. In particular, a set of the individual data processing section 121 and the signal processing section 122 in each AP is also referred to as an AP entity. When the wireless communication apparatus 100 is an MLD, at least two APs are structural elements of the wireless communication apparatus 100. Note that, when the wireless communication apparatus 100 is an SLD, the wireless communication apparatus 100 only includes a single AP (for example, the AP 101). Note that the APs 101 and 102 may also perform processes on the same link.

The communication control section 111 controls operations performed by the respective structural elements and information transmission performed between the structural elements. Further, the communication control section 111 performs control to deliver, to the shared data processing section 113 and the APs 101 and 102, control information and management information that are to be reported to another wireless communication apparatus. The communication control section 111 is also referred to as an MLD management entity.

The communication control section 111 according to the first embodiment of the present disclosure controls secondary channel access upon reporting a P2P period of time allocated by TXOP sharing. Specifically, the communication control section 111 generates a trigger frame used to report, to the subordinate wireless communication apparatuses 1, 2, and 3, a band used to perform P2P communication and a band used to perform secondary channel access. The secondary channel access and the trigger frame used to perform the secondary channel access will be described in detail later.

The communication storage section 112 retains information used by the communication control section 111. The communication storage section 112 retains data to be transmitted to the wireless communication apparatuses 1, 2, and 3 and data received from the wireless communication apparatuses 1, 2, and 3.

At the time of transmission, the shared data processing section 113 performs sequence management of the data retained in the communication storage section 112 as well as the control information and management information that are received from the communication control section 111, and performs, for example, encryption processing. Then, the shared data processing section 113 assigns the processed data to the respective individual data processing sections 121. At the time of reception, the shared data processing section 113 performs decryption processing and reorder processing on the data.

At the time of transmission, each individual data processing section 121 performs channel access operation on the basis of carrier sensing, generates a data unit by adding a media access control (MAC) header and an error-detection code to data to be transmitted, and performs processing of coupling a plurality of data units. At the time of reception, each individual data processing section 121 performs processing of decoupling a MAC header of the received data unit, performs analysis and error detection, and performs an operation of requesting retransmission.

Note that the operations performed by the shared data processing section 113 and each individual data processing section 121 are not limited to the operations described above, and, for example, one of the shared data processing section 113 and the individual data processing section 121 may perform an operation performed by another of the shared data processing section 113 and the individual data processing section 121. The shared data processing section 113 is also referred to as an upper MAC, a higher MAC, or an MLD entity, and the individual data processing section 121 is also referred to as a lower MAC.

At the time of transmission, each signal processing section 122 performs, for example, encoding, interleaving, and modulation on a data unit, and adds a physical header to generate a symbol stream. At this point, each signal processing section 122 may perform space separation processing for multi-input multi-output (MIMO). Note that, instead of performing the space separation processing, each signal processing section 122 may apply any amount of delay (hereinafter referred to as a cyclic shift delay (CSD)) for each antenna 150. At the time of reception, each signal processing section 122 analyzes the physical header, and performs, for example, demodulation, deinterleaving, and decoding on the symbol stream to generate the data unit. Further, each signal processing section 122 estimates complex channel characteristics and performs space separation processing as necessary.

At the time of transmission, each wireless interface section 123 performs digital-to-analog signal conversion, filtering, up-conversion, and phase control on a symbol stream, and generates a transmission signal. At the time of reception, the wireless interface section 123 performs down-conversion, filtering, and analog-to-digital signal conversion on a reception signal, and generates the symbol stream.

The amplification section 124 of each AP amplifies a signal input through the wireless interface section 123 or the antenna 150. A portion of the amplification section 124 may be a structural element external to the communication section 110. Further, a portion of the amplification section 124 may be included in the wireless interface section 123.

The control section 130 controls the communication section 110 and the communication control section 111. Further, on behalf of the communication control section 111, the control section 130 may perform a portion of operations performed by the communication control section 111. Furthermore, the communication control section 111 and the control section 130 may be formed into a single block. For example, a control section of the information processing apparatus according to the first embodiment of the present disclosure corresponds to the communication control section 111, or corresponds to at least one of the communication section 110 or the communication control section 111. Further, for example, the information processing apparatus according to the first embodiment of the present disclosure includes the communication control section 111, and may include other structural elements, that is, for example, at least one of the APs 101 and 102.

The storage section 140 retains information used by the control section 130 and the communication section 110. Further, on behalf of the communication storage section 112, the storage section 140 may perform a portion of operations performed by the communication storage section 112. The storage section 140 and the communication storage section 112 may be formed into a single block.

Further, each AP may include a storage section. Note that, in the first embodiment of the present disclosure, frequencies or frequency bands of links used by the APs are different, but the case in which the APs use links having the same frequency or the same frequency band is also not excluded.

A plurality of sets of the individual data processing section 121 and the signal processing section 122 may be connected to one wireless interface section 123. In other words, one wireless interface section 123 may be shared to be used by a plurality of APs.

Further, a plurality of sets of the wireless interface section 123, the amplification section 124, and the antenna 150 may be connected to one signal processing section 122. In other words, the signal processing section 122 may be shared to be used by a plurality of APs. In this case, one individual data processing section 121 or a plurality of individual data processing sections 121 may be provided.

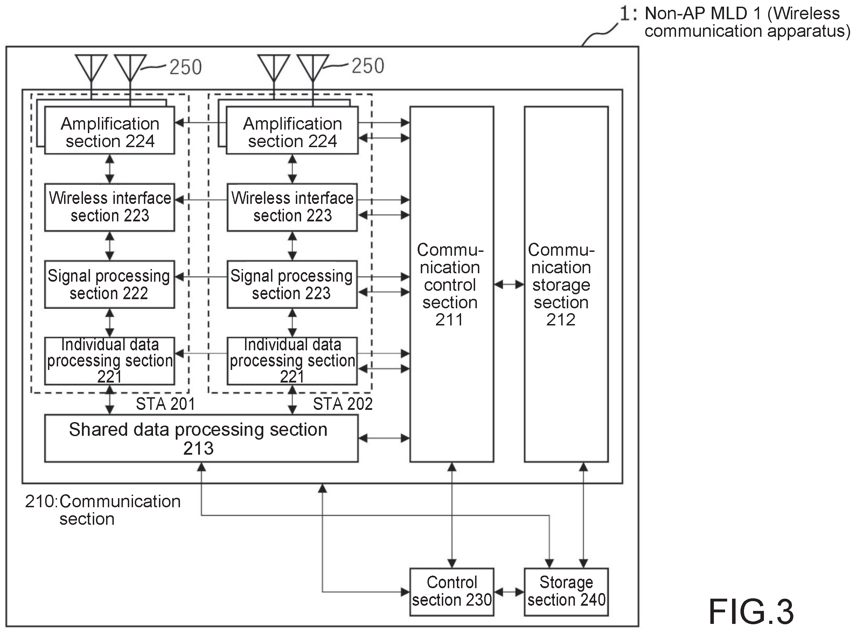

Fig. 3 is a block diagram of the wireless communication apparatus 1 including the information processing apparatus according to the present disclosure. The information processing apparatus is also referred to as a wireless communication controlling apparatus since the information processing apparatus includes a function to control wireless communication. The information processing apparatus according to the present disclosure may be implemented as, for example, a semiconductor chip that includes a wireless communication controlling function. Further, the information processing apparatus according to the present disclosure may be implemented as, for example, a smartphone, personal computer, or in-vehicle apparatus that includes, for example, a screen display function or a user interface in addition to the wireless communication controlling function. A basic configuration of the wireless communication apparatus 1 is similar to the basic configuration of the wireless communication apparatus 100. Further, a configuration of each of the wireless communication apparatuses 2 and 3 is similar to the configuration of the wireless communication apparatus 1.

The communication apparatus 1 primarily includes a communication section 210, a control section 230, and a storage section 240. The communication section 210 includes a communication control section 211, a communication storage section 212, a shared data processing section 213, an STA 201, and an STA 202. The communication section 210 may be implemented by at least one LSI.

The STAs 201 and 202 are used to perform processes on different transmission lines (links). Note that the STAs 201 and 202 may also perform processes on the same link. The STAs 201 and 202 each include an individual data processing section 221, a signal processing section 222, a wireless interface section 223, at least one amplification section 224, and at least one antenna 250. In other words, a set of the individual data processing section 221, the signal processing section 222, the wireless interface section 223, the amplification section 224, and the antenna 250 is included in the station (STA). When the wireless communication apparatus 1 is an MLD, at least two STAs are structural elements of the wireless communication apparatus 1. Note that, when the wireless communication apparatus 1 is an SLD, the wireless communication apparatus 1 only includes a single STA, that is, for example, the STA 201. In particular, a set of the individual data processing section 221 and the signal processing section 222 is also referred to as a non-AP STA entity.

The communication control section 211 controls operations performed by the respective structural elements and information transmission performed between the structural elements. Further, the communication control section 211 performs control to deliver, to the shared data processing section 213 and the STAs 201 and 202, control information and management information that are to be reported to another wireless communication apparatus. The communication control section 211 is also referred to as an MLD management entity.

The communication control section 211 according to the first embodiment of the present disclosure controls the respective structural elements on the basis of information reported by the wireless communication apparatus 100. More specifically, the communication control section 211 controls, for example, the shared data processing section 213 and the STAs 201 and 202 by analyzing a trigger frame generated by the communication control section 111 illustrated in Fig. 2, such that P2P communication is performed using a band including a primary channel described later, or such that communication is performed on a secondary channel described later on the basis of information regarding secondary channel access that is reported by the wireless communication apparatus 100.

The communication storage section 212 retains information used by the communication control section 211. The communication storage section 212 retains data to be transmitted to the wireless communication apparatus 100 and data received from the wireless communication apparatus 100.

At the time of transmission, the shared data processing section 213 performs sequence management of the data retained in the communication storage section 212 as well as the control information and management information that are received from the communication control section 211, and performs, for example, encryption processing. Then, the shared data processing section 213 assigns the processed data to the respective individual data processing sections 221. At the time of reception, the shared data processing section 213 performs decryption processing and reorder processing on the data.

At the time of transmission, each individual data processing section 221 performs channel access operation on the basis of carrier sensing, generates a data unit by adding a MAC header and an error-detection code to data to be transmitted, and performs processing of coupling a plurality of data units. At the time of reception, each individual data processing section 221 performs processing of decoupling a MAC header of the received data unit, performs analysis and error detection, and performs an operation of requesting retransmission.

Note that the operations performed by the shared data processing section 213 and each individual data processing section 221 are not limited to the operations described above, and, for example, one of the shared data processing section 213 and the individual data processing section 221 may perform an operation performed by another of the shared data processing section 213 and the individual data processing section 221. The shared data processing section 213 is also referred to as an upper MAC, a higher MAC, or an MLD entity, and the individual data processing section 221 is also referred to as a lower MAC.

At the time of transmission, each signal processing section 222 performs, for example, encoding, interleaving, and modulation on a data unit, and adds a physical header to generate a symbol stream. At this point, each signal processing section 222 may perform space separation processing for MIMO. Note that, instead of performing the space separation processing, each signal processing section 222 may apply a cyclic shift delay CSD for each antenna 250. At the time of reception, each signal processing section 222 analyzes the physical header, and performs, for example, demodulation, deinterleaving, and decoding on the symbol stream to generate the data unit. Further, each signal processing section 222 estimates complex channel characteristics and performs space separation processing as necessary.

At the time of transmission, each wireless interface section 223 performs digital-to-analog signal conversion, filtering, up-conversion, and phase control on a symbol stream, and generates a transmission signal. At the time of reception, the wireless interface section 223 performs down-conversion, filtering, and analog-to-digital signal conversion on a reception signal, and generates the symbol stream.

The amplification section 224 of each STA amplifies a signal input through the wireless interface section 223 or the antenna 250. A portion of the amplification section 224 may be a structural element external to the communication section 210. Further, a portion of the amplification section 224 may be included in the wireless interface section 223.

The control section 230 controls the communication section 210 and the communication control section 211. Further, on behalf of the communication control section 211, the control section 230 may perform a portion of operations performed by the communication control section 211. Furthermore, the communication control section 211 and the control section 230 may be formed into a single block. For example, a control section of the information processing apparatus according to the present disclosure corresponds to the communication control section 211, or corresponds to at least one of the communication section 210 or the communication control section 211. Further, for example, the information processing apparatus according to the present disclosure includes the communication control section 211, and may include other structural elements, that is, for example, at least one of the STAs 201 and 202.

The storage section 240 retains information used by the control section 230 and the communication section 210. Further, on behalf of the communication storage section 212, the storage section 240 may perform a portion of operations performed by the communication storage section 212. The storage section 240 and the communication storage section 212 may be formed into a single block.

Further, each STA may include a storage section. Note that, in the present embodiment, frequencies or frequency bands of links used by the STAs are different, but the case in which the STAs use links having the same frequency or the same frequency band is also not excluded.

A plurality of sets of the individual data processing section 221 and the signal processing section 222 may be connected to one wireless interface section 223. In other words, one wireless interface section 223 may be shared to be used by a plurality of STAs.

Further, a plurality of sets of the wireless interface section 223, the amplification section 224, and the antenna 250 may be connected to one signal processing section 222. In other words, the signal processing section 222 may be shared to be used by a plurality of STAs. In this case, one individual data processing section 221 or a plurality of individual data processing sections 221 may be provided.

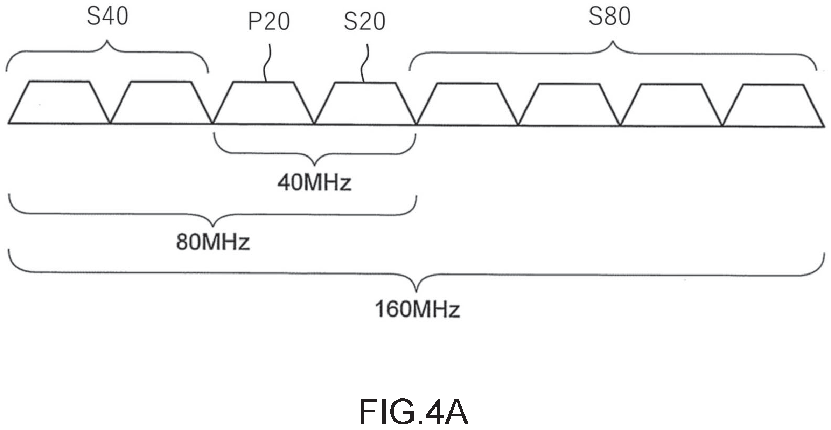

Fig. 4A illustrates a first example of channel extension according to the first embodiment of the present disclosure. In the channel extension, a frequency band is generated that is obtained by bundling a channel P20 that is one primary channel used as a reference, and at least one of a plurality of secondary channels provided for extension, the at least one of the plurality of secondary channels corresponding to a necessary frequency bandwidth. A channel that corresponds to a frequency band obtained by bundling a plurality of secondary channels may also referred to as a secondary channel. Note that, herein, the primary channel and the secondary channel are also respectively referred to as a first channel and a second channel.

The channel P20 has a 20-MHz band. The channel can be extended to a 40-MHz band by adding the channel P20 and a channel S20 of a 20-MHz band. The channel can be extended to a 80-MHz band by adding the channel P20, the channel S20, and a channel S40 of a 40-MHz band. The channel can be extended to a 160-MHz band by adding the channel P20, the channel S20, the channel S40, and a channel S80 of an 80-MHz band.

Note that, herein, for example, the channels P20 and S20 may be respectively simply referred to as P20 and S20. Further, herein, for example, an extension channel including the channel P20 and S20 may be referred to as P20 + S20.

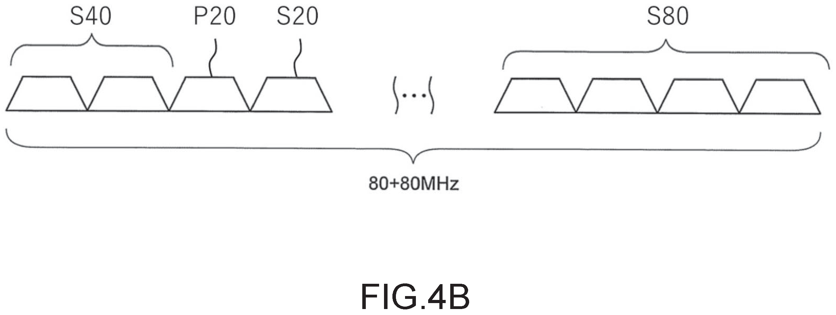

Fig. 4B illustrates a second example of channel extension according to the first embodiment of the present disclosure. In Fig. 4A, the channels P20, S20, S40, and S80 are arranged adjacently, whereas Fig. 4B is different from Fig. 4A in that the channel S80 is spaced from the channels P20, S20, and S40. The channel extension illustrated in Fig. 4A is referred to as a 160-MHz channel extension. On the other hand, the channel extension illustrated in Fig. 4B is referred to as a (80 + 80)-MHz channel extension.

Herein, a range in which one primary channel can be extended, as illustrated in each of Figs. 4A and 4B, is referred to as a channel set. The channel set includes one primary channel and at least one secondary channel. The channel set may be channels successive in a frequency domain, as illustrated in Fig. 4A, or may have a band in which a discretionary channel has been separated, as illustrated in Fig. 4B. Note that, when a channel set with separation is used, it is necessary that the channel set be defined in advance in the BSS 10.

Figs. 4A and 4B each illustrate a channel set with a 160-MHz band, although the channel set is not limited thereto. The channel set may have a wider band (for example, 320 MHz) or a narrower band (for example, 80 MHz). For example, the wireless communication apparatus 100 may perform a 320-MHz channel extension or (160 + 160)-MHz channel extension using a 320-MHz channel set. Further, Figs. 4A and 4B each illustrate an example of performing channel extension using a power-of-2 multiple of a 20-MHz band, although the channel extension is not limited thereto. For example, the wireless communication apparatus 100 may perform channel extension of a 120-MHz band (P20 + S20 + S40 + S40) or a 240-MHz band (P20 + S20 + S40 + S80 + S80). Further, a smallest unit of channel extension does not necessarily have to be 20 MHz.

On the basis of an acquired right to transmission, the wireless communication apparatus 100 may cause the wireless communication apparatus 1, 2, or 3 to occupy an extension channel generated from a primary channel only or from a combination of the primary channel and a discretionary number of secondary channels, as described above. Further, the wireless communication apparatus 100 according to the first embodiment of the present disclosure may also cause the wireless communication apparatus 1, 2, or 3 to occupy a band that does not include a primary channel but includes at least one secondary channel.

For example, the wireless communication apparatus 100 may cause the wireless communication apparatuses 2 and 3 to occupy a band of "P20 + S20". In this case, the wireless communication apparatus 100 may use S40 illustrated in Fig. 4A and not occupied by the wireless communication apparatus 2 or 3 to communicate with the wireless communication apparatus 1. As described above, performing wireless communication occupying a band that does not include a primary channel but includes at least one secondary channel is herein referred to as performing secondary channel access. Further, a wireless communication apparatus that performs P2P communication using a primary channel is herein referred to as a third wireless communication apparatus, and a wireless communication apparatus that performs secondary channel access is herein referred to as a fourth wireless communication apparatus. Note that, in the present disclosure, P2P communication between the wireless communication apparatuses 2 and 3 is performed using at least a primary channel. However, the case in which only a secondary channel is used for P2P communication and a primary channel is used for communication between the wireless communication apparatuses 100 and 1 is also not excluded. Further, the wireless communication apparatus 1 may perform, using secondary channel access, P2P communication with another wireless communication apparatus that belongs to the BSS 10 and that is not illustrated in Fig. 1.

The secondary channel access makes it possible to use a secondary channel more efficiently.

In the case of related technologies that do not use the secondary channel access according to the present disclosure, occupation of a primary channel is indispensable for occupying a band. When, for example, the wireless communication apparatuses 2 and 3 occupy the band of "P20 + S20", the wireless communication apparatus 1 is not allowed to occupy P20, and thus is not allowed to occupy any of S20, S40, and S80, which are used to perform channel extension for P20. In other words, it is necessary that the wireless communication apparatus 1 avoid performing communication using the entirety of the band illustrated in Fig. 4A.

In this case, S40 illustrated in Fig. 4A is not used for P2P communication between the wireless communication apparatuses 2 and 3, and the wireless communication apparatus 1 is also not allowed to use S40. In other words, S40 is a band that is not used effectively in the BSS 10.

According to the secondary channel access according to the first embodiment of the present disclosure, S40, which is not used effectively for related technologies, as described above, can be used to communicate with the wireless communication apparatus 1. Likewise, for example, S80, which is not occupied by the wireless communication apparatus 2 or 3, may be used together with S40 to communicate with the wireless communication apparatus 1, or may be occupied by another wireless communication apparatus that belongs to the BSS 10 not illustrated in Fig. 1. This makes it possible to use all of the channels illustrated in Fig. 4A effectively.

According to the first embodiment of the present disclosure, communication performed by a wireless communication apparatus that is situated in one BSS and other than at least one wireless communication apparatus that occupies a primary channel, and at least one wireless communication apparatus that performs secondary channel access, is prevented in a channel set shared in the one BSS.

At least one of physical carrier sensing or virtual carrier sensing may be performed to occupy a channel. The physical carrier sensing is a process of sensing a radio-wave state to confirm that a channel is not used by another wireless communication apparatus. The virtual carrier sensing is a process of confirming, by a report made by another wireless communication apparatus, that a channel is occupied by the other wireless communication apparatus.

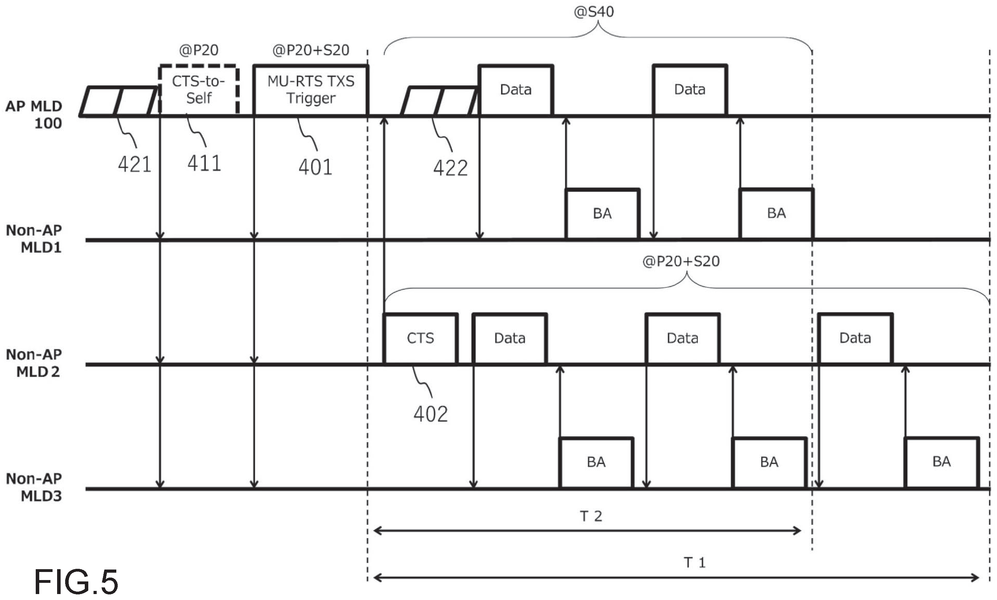

Fig. 5 is a diagram of a sequence of the secondary channel access according to the first embodiment of the present disclosure. Fig. 5 illustrates an example in which the AP MLD 100 acquires a right to transmission, allocates, to the non-AP MLDs 2 and 3, a portion of a band for which the right to transmission is acquired, the portion being allocated as a band (for example, P20 + S20) used to perform P2P communication for a first period of time T1, and uses a remaining band that is not allocated to the non-AP MLD 1/2/ (S40 in this example), in order for communication to be performed between the non-AP MLD 1 and the AP MLD 100 for all of or a portion of the first period of time T1 (a second period of time T2). "P20 + S20" in Fig. 5 corresponds to the channel 11 illustrated in Fig. 1, and S40 corresponds to the channel 12 illustrated in Fig. 1.

Note that, herein, a channel (for example, S20 in Fig. 5) included in a secondary channel and used to perform P2P communication as an extension of a primary channel may be referred to as a third channel, and a channel (for example, S40 in Fig. 5) used to perform secondary channel access may be referred to as a fourth channel.

In the sequence illustrated in Fig. 5, signals transmitted and received by the AP MLD 100 and the non-AP MLD 1/2/3, and frame spacing with which frames are transmitted and received by the AP MLD 100 and the non-AP MLD 1/2/3, are indicated along a temporal axis indicated using a solid line. In the description, a short interframe space (SIFS) that enables carrier sensing to be omitted is assumed to be used as frame spacing with which frames are successively transmitted and received by the AP MLD 100 and the non-AP MLD 1/2/3, unless otherwise specified. Note that, without being limited thereto, SIFS may be substituted with carrier sensing. Further, frames may be spaced with appropriate frame spacing according to the IEEE 802.11 standards. Examples of the type of the frame spacing include a distributed coordination function interframe space (DIFS), an arbitration interframe space (AIFS), a point coordination function interframe space (PIFS), an extended interframe space (EIFS), and a reduced interframe space (RIFS).

Before the sequence illustrated in Fig. 5 is performed, the AP MLD 100 and the non-AP MLD 1/2/3 may perform a capability check, where the capability check is performed to check whether a function necessary for the sequence illustrated in Fig. 5 is supported. For example, the AP MLD 100 the non-AP MLD 1/2/3 may check whether secondary channel access is supported. Furthermore, each of the AP MLD 100 and the non-AP MLD 2/3 may check whether P2P communication is supported. Further, the non-AP MLD 2 and the non-AP MLD 3 may check whether P2P communication is supported. Furthermore, the AP MLD 100 and the non-AP MLD 1 may determine at least one band used to perform secondary channel access, a priority, and an identifier corresponding to the band.

First, clear channel assessment (CCA) 421 with which the AP MLD 100 acquires a right to transmission on P20 on the basis of a specified procedure, is provided. The specified procedure is, for example, a back-off procedure. After the acquisition of the right to transmission, the AP MLD 100 may transmit a CTS-to-self signal 411.

When the AP MLD 100 acquires the right to transmission on P20, the AP MLD 100 transmits a multiuser request-to-send transmission opportunity sharing trigger (MU-RTS TXS trigger) signal 401. The MU-RTS TXS trigger signal 401 is a signal used to secure a channel ("P20 + S20" in Fig. 5) used by the non-AP MLD 2/3 to perform P2P communication. Carrier sensing is performed on S20 before a signal of the MU-RTS TXS trigger signal 401 is transmitted, and a right to transmission is acquired. Note that carrier sensing on S20 may be performed concurrently with carrier sensing performed to acquire a right to transmission on P20. Herein, the MU-RTS TXS trigger signal 401 is also referred to as a first signal.

The AP MLD 100 transmits the MU-RTS TXS trigger signal 401 using the channel secured by use of the MU-RTS TXS trigger signal 401. Note that the AP MLD 100 may perform channel bonding on all of or a portion of the secured channel and transmit the MU-RTS TXS trigger signal 401.

The MU-RTS TXS trigger signal 401 includes information regarding securing of a channel and information regarding secondary channel access. The MU-RTS TXS trigger signal 401 is transmitted to at least one of the non-AP MLD 2 or the non-AP MLD 3 and to the non-AP MLD 1. Note that the AP MLD 100 may transmit (broadcast) the MU-RTS TXS trigger signal 401 to all of the subordinate non-AP MLDs in order to report the information regarding secondary channel access throughout the entirety of the BSS 10. Further, the AP MLD 100 may transmit the information regarding secondary channel access using a signal (for example, a second signal described later) that is different from the MU-RTS TXS trigger signal 401. In this case, the MU-RTS TXS trigger signal 401 may only be transmitted to at least one of the non-AP MLD 2 or the non-AP MLD 3.

The information regarding securing of a channel includes a period of time (that is, the first period of time T1) for which P2P communication is performed, a band to be secured ("P20 + S20" in the example illustrated in Fig. 5), and information used to report to a specified wireless communication apparatus (at least one of the non-AP MLD 2 or the non-AP MLD 3 in the example illustrated in Fig. 5) about sharing of a right to transmission for the band to be secured. The first period of time T1 may be a period of time for which only P2P communication is performed, or may be a period of time for which both P2P communication and communication with the AP MLD 100 are performed. Herein, the information regarding securing of a channel is referred to as second information.

Further, the AP MLD 100 may confirm with the non-AP MLD 2/3 in advance if the non-AP MLD 2/3 holds traffic destined for the AP MLD 100, and it may be determined, on the basis of such information, whether the first period of time T1 is a period of time for which only P2P communication is performed or a period of time for which both P2P communication and communication with the AP MLD 100 are performed. The confirmation of whether traffic is held may be performed by exchange of a buffer status report poll (BSRP) frame for a buffer status report (BSR).

The information regarding secondary channel access includes a band (S40 in the example illustrated in Fig. 5) with which secondary channel access is performed, and information used to instruct a specified wireless communication apparatus (the non-AP MLD 1 in the example illustrated in Fig. 5) to perform communication on the basis of a right to transmission on a secondary channel. Further, the information regarding secondary channel access may include information regarding a period of time (that is, the second period of time T2) for which secondary channel access is performed. The second period of time T2 may be set to be shorter than the first period of time T1. This enables a signal to be received when the non-AP MLD 2/3 having completed the P2P communication performs transmission to the AP MLD 100. Herein, the information regarding secondary channel access is referred to as first information.

When the non-AP MLD 2 or the non-AP MLD 3 receives the MU-RTS TXS trigger signal 401 including information regarding P2P communication from the AP MLD 100, the non-AP MLD 2 or the non-AP MLD 3 transmits a CTS signal 402 to the AP MLD 100 using P20 and S20, where P20 and S20 correspond to a band used to perform P2P communication and are included in the MU-RTS TXS trigger signal 401. Thereafter, the non-AP MLDs 2 and 3 perform P2P communication using P20 and S20. Note that it is not necessary that the non-AP MLD 2/3 use all of the band being specified by the MU-RTS TXS trigger signal 401 and with which P2P communication is performed, and may perform P2P communication only using P20 or a portion of S20. Further, the non-AP MLD 2/3 may perform channel bonding on all of or a portion of the band being specified by the MU-RTS TXS trigger signal 401 and with which P2P communication is performed.

When the AP MLD 100 transmits the MU-RTS TXS trigger signal 401, the AP MLD 100 acquires a right to transmission with CCA 422 using a specified procedure on the basis of the information regarding secondary channel access that is included in the MU-RTS TXS trigger signal 401. The specified procedure includes a procedure performed to check whether the secondary channel (S40 in this example) is being used by another wireless communication apparatus. When the secondary channel is not being used by the other wireless communication apparatus, the AP MLD 100 is allowed to acquire a right to transmission on the secondary channel. For example, the specified procedure may be a back-off procedure or may be confirmation that a signal is not detected for a certain period of time (for example, PIFS). A start point of the PIFS may be an end of the signal 401. Further, the non-AP MLD 1 may perform a similar operation.

When the AP MLD 100 acquires the right to transmission, the AP MLD 100 or the non-AP MLD 1 performs communication on S40. The AP MLD 100 may terminate communication on the secondary channel (S40) after a single data transmission is completed. The AP MLD 100 may await reception on the primary channel every time a single data transmission is completed, and may resume communication on the secondary channel when the AP MLD 100 confirms that there is no transmission destined for the AP MLD 100 from the non-AP MLD 2 or the non-AP MLD 3.

As described above, the non-AP MLD 2/3 performs wireless communication using a primary channel on the basis of information regarding securing of a channel that is included in the MU-RTS TXS trigger signal 401. Further, the non-AP MLD 1 performs wireless communication using a secondary channel (S40) on the basis of information regarding secondary channel access that is included in the MU-RTS TXS trigger signal 401. Note that the non-AP MLD 1 performs secondary channel access in a state in which a primary channel is being used by the non-AP MLD 2/3, and may also perform wireless communication using the primary channel in a state other than the state described above. The non-AP MLD 1 may perform P2P communication with the non-AP MLD 2/3 using a primary channel. Further, one of or both of the non-AP MLDs 2/3 may perform secondary channel access.

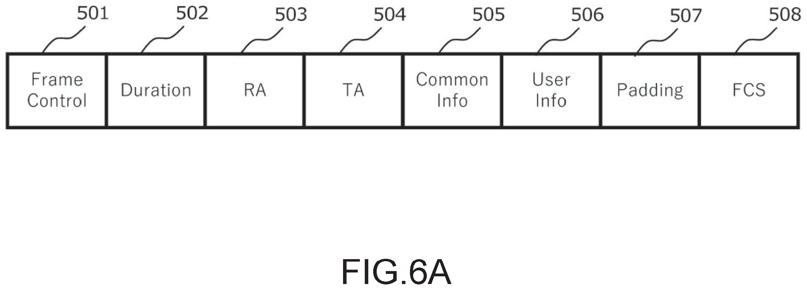

Fig. 6A illustrates a frame format of the MU-RTS TXS trigger signal 401. The frame illustrated in Fig. 6A includes Frame Control 501, Duration 502, Receiver Address (RA) 503, Transmitter Address (TA) 504, Common Info 505, User Info 506, Padding 507, and Frame Check Sequence (FCS) 508.

Frame Control 501 stores therein information regarding setting of the frame. Duration 502 stores therein information regarding a length of the frame. RA 503 stores therein information regarding a reception address. Note that, in the first embodiment of the present disclosure, RA 503 may be a broadcast address. TA 504 stores therein information regarding a transmission address. Common Info 505 is information reported to destination terminals of the frame in common. User Info 506 stores therein information reported to each destination terminal of the frame individually (hereinafter referred to as individual information). The individual information includes a plurality of fields. Further, User Info 506 includes individual information for each destination terminal. In the case of the BSS 10 illustrated in Fig. 1, User Info 506 includes at least individual information (an individual field) for each of the non-AP MLDs 1/2/3. Padding 507 is provided to adjust a length of the frame. FCS 508 stores therein information regarding error detection.

The MU-RTS TXS trigger signal 401 according to the first embodiment of the present disclosure stores therein the information regarding secondary channel access by Common Info 505 and User Info 506 being extended or changed. Note that, herein, the information regarding secondary channel access is also referred to as second-channel connection information.

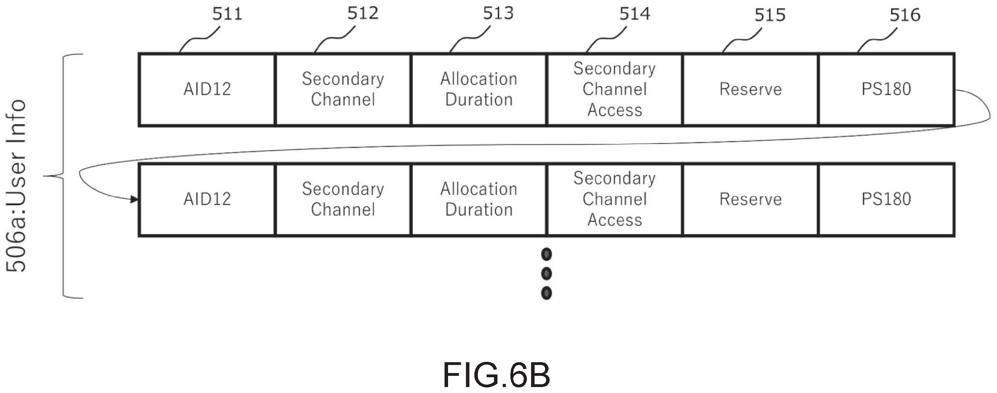

Fig. 6B illustrates a first example of a configuration of User Info 506 according to the first embodiment of the present disclosure. Pieces of individual information of a plurality of pieces of individual information included in User Info 506a illustrated in Fig. 6B each include Identifier (an association ID 12: AID 12) 511, Secondary Channel 512, Allocation Duration 513, Secondary Channel Access 514, Secured Field (Reserve) 515, and Extension Field (PS 180) 516.

Identifier 511 stores therein a portion of an association ID (AID) 12 as an identifier of a destination terminal. Secondary Channel 512 stores therein information used to specify a channel used for secondary channel access. Herein, information stored in Secondary Channel 512 is also referred to as band information regarding a second channel.

Secondary Channel 512 includes band information regarding a secondary channel (for example, S40 in Fig. 5) to be allocated for secondary channel access. Secondary Channel 512 may include a center frequency and a bandwidth. Alternatively, Secondary Channel 512 may include an identifier determined in advance. Alternatively, Secondary Channel 512 may include one of an operating class, a channel set, and a channel center frequency index that are defined by Global operating classes.

Allocation Duration 513 stores therein information regarding a period of time (that is, the second period of time T2) for which secondary channel access is performed.

Secondary Channel Access 514 stores therein information indicating whether communication using secondary channel access is to be performed by a corresponding non-AP MLD 1/2/3. In the case of Fig. 5, Secondary Channel Access 514 related to the non-AP MLD 1 stores therein a value (for example, 1) used to give an instruction to perform secondary channel access, and Secondary Channel Access 514 related to the non-AP MLD 2/3 stores therein a value (for example, 0) used to give an instruction not to perform secondary channel access. Note that a report that a right to transmission using a band ("P20 + S20" in Fig. 5) secured by the MU-RTS TXS trigger signal 401 is shared may be made by a value used to give an instruction not to perform secondary channel access being stored in Secondary Channel Access 514. Each of the non-AP MLDs 1/2/3 determines whether to perform secondary channel access, on the basis of the value included in Secondary Channel Access 514.

Secured Field 515 is a field ignored by the non-AP MLD 1/2/3, and any information is stored by the AP MLD 100 in Secured Field 515. Alternatively, Secured Field 515 may be defined as a secondary channel access scheme. In this case, Secured Field 515 stores therein information regarding, for example, a communication scheme (a modulation coding scheme: MCS) upon performing secondary channel access, the number of spatial streams (Nss), a report about an AP-led access (a trigger-based access), a permission for an STA-led access, and a permission for P2P communication.

Extension Field 516 is used to store extension information of information regarding a band. Note that, in the first embodiment of the present disclosure, Extension Field 516 is not used for secondary channel access.

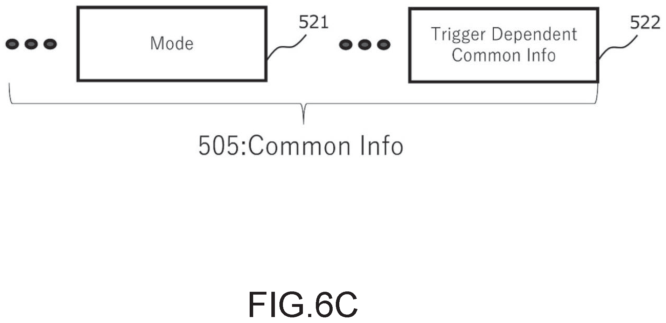

Fig. 6C illustrates a configuration of Common Info 505 according to the first embodiment of the present disclosure. Common Info 505 includes Mode Specification (Mode) 521 and Trigger Dependent Common Info 522.

Mode Specification 521 is a field, in a normal MU-RTS TXS trigger signal, that corresponds to a GI-and-HE/EHT-LTF type/triggered-TXOP-sharing mode. This field is a field used to specify one of a guard interval (GI)-and-long training field (LTF) type and a triggered-TXOP-sharing mode. Mode Specification 521 according to the first embodiment of the present disclosure is used to specify a triggered-TXOP-sharing mode. Further, Mode Specification 521 according to the first embodiment of the present disclosure particularly stores therein a specified numeral used such that the triggered-TXOP-sharing mode is set to be a mode that supports secondary channel access. The specified numeral is a numeral (for example, 3) that is not the same as the Trigger TXOP Sharing Mode subfield value defined in the IEEE 802.11 standards. Rules about a mode of secondary channel access are given in Table 1.

**[Table 1]**

| Trigger TXOP Sharing Mode subfield value | Description |
|---|---|
| ... | ... |
| 3 | MU-RTS mode used to perform MU-RTS TXOP sharing procedure that enables scheduled STA to only transmit CTS frame and at least one MPDU destined for another STA except for related AP, and that enables other STA to transmit at least one MPDU using secondary channel access. |

When the AP MLD 100 stores, in Mode Specification 521, the numeral defined by specified rules (for example, the rules given in Table 1), this enables the AP MLD 100 to report to the non-AP MLD 1/2/3 that the MU-RTS TXS trigger signal 401 includes information regarding secondary channel access.

Trigger Dependent Common Info 522 according to the first embodiment of the present disclosure may store therein information stored in User Info 506 illustrated in Fig. 6B when the information regarding secondary channel access is reported to all of the non-AP MLDs subordinate to the AP MLD 100.

Using a control section (for example, the communication control section 211 illustrated in Fig. 3), the non-AP MLD according to the first embodiment of the present disclosure detects information destined for the non-AP MLD itself in, for example, User Info 506 included in the MU-RTS TXS trigger signal 401. Further, the non-AP MLD performs P2P communication using a primary channel on the basis of the information detected using the control section. Furthermore, when Mode Specification 521 includes a specified value (also referred to as an identification number), the non-AP MLD searches for information regarding secondary channel access, and when Secondary Channel Access 514 includes a specified value, the non-AP MLD performs secondary channel access on the basis of band information stored in Secondary Channel 512.

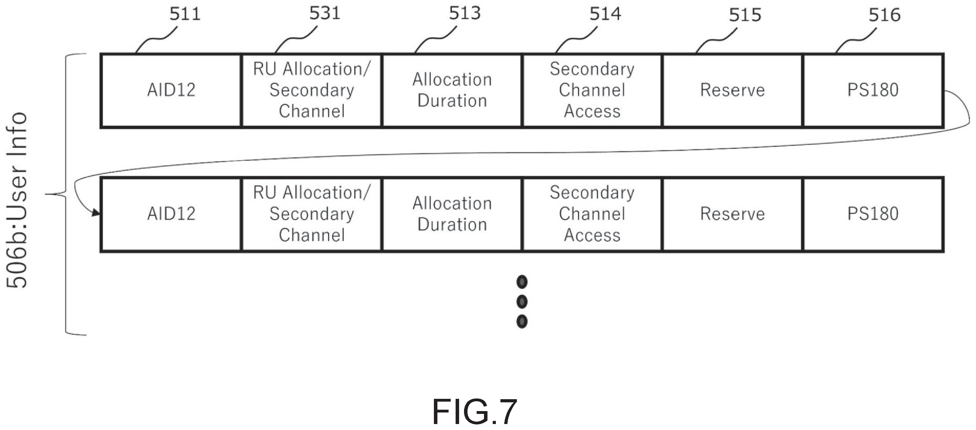

Fig. 7 illustrates a second example of the configuration of User Info 506 according to the first embodiment of the present disclosure. User Info 506b illustrated in Fig. 7 can store therein resource units (RU) allocation that corresponds to information regarding allocation of resource units. User Info 506b includes RU Allocation/Secondary Channel 531 instead of Secondary Channel 512 illustrated in Fig. 6B.

Information to be stored in RU Allocation/Secondary Channel 531 differs depending on whether a corresponding non-AP MLD performs secondary channel access. Whether the non-AP MLD performs secondary channel access is specified by, for example, a value included in Secondary Channel Access 514. RU Allocation/Secondary Channel 531 related to a non-AP MLD (for example, the non-AP MLD 1 illustrated in Fig. 5) that performs secondary channel access stores therein band information regarding a secondary channel (S40 in the example illustrated in Fig. 5) to be used. In this case, the information stored in RU Allocation/Secondary Channel 531 is similar to the information stored in Secondary Channel 512 illustrated in Fig. 6B.

RU Allocation/Secondary Channel 531 related to a non-AP MLD (for example, the non-AP MLD 2/3 illustrated in Fig. 5) that does not perform secondary channel access stores therein RU allocation. The RU allocation corresponds to an allocation number that indicates a band that is included in a band secured using the MU-RTS TXS trigger signal 401 and that is to be allocated to a corresponding non-AP MLD. The RU allocation makes it possible to specify which band is to be allocated to the non-AP MLD 2/3.

Further, in the case described above, Extension Field 516 is used to extend the field of RU Allocation/Secondary Channel 531. In other words, Extension Field 516 stores therein a portion of the RU allocation.

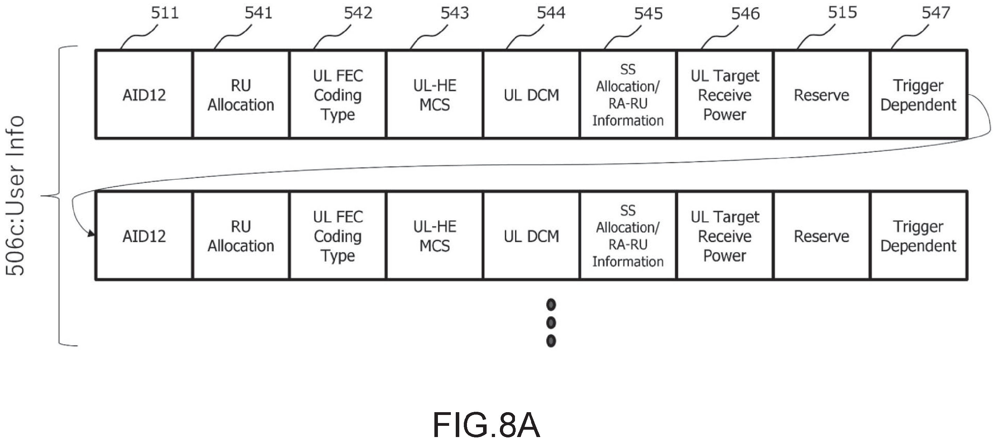

Fig. 8A illustrates a third example of the configuration of User Info 506 according to the first embodiment of the present disclosure. User Info 506c illustrated in Fig. 8A supports upward MIMO (also referred to as uplink communication) defined in the IEEE 802.11 standards, and includes information regarding the uplink communication. User Info 506c includes Identifier 511, Resource Unit Allocation Information (RU Allocation) 541, Uplink Forward Error Correction (Uplink Forward Error Correction Coding Type; UL FEC Coding Type) 542, Uplink Modulation Encoding Scheme (Uplink High Efficiency Modulation an Coding Scheme; UL-HE MCS) 543, Uplink DCM (Uplink Dual Carrier Modulation; UL DCM) 544, Spatial Stream (SS) Allocation/Random Access Resource Units (RA-RU) Information 545, Uplink Received Power (UL Target Receive Power) 546, Secured Field 515, and Trigger Dependent 547.

Resource Unit Allocation Information 541 stores therein the RU allocation described with reference to Fig. 7. Uplink Forward Error Correction 542 stores therein information regarding specification of forward error correction in an uplink. Uplink Modulation Encoding Scheme 543 stores therein information regarding specification of a modulation encoding scheme in an uplink. Uplink DCM 544 stores therein information regarding specification of the use of dual carrier modulation in an uplink. SS Allocation/RA-RU Information 545 stores therein information regarding specification of a spatial stream or information regarding specification of random access using resource units. Uplink Received Power 546 stores therein information regarding received power in an uplink.

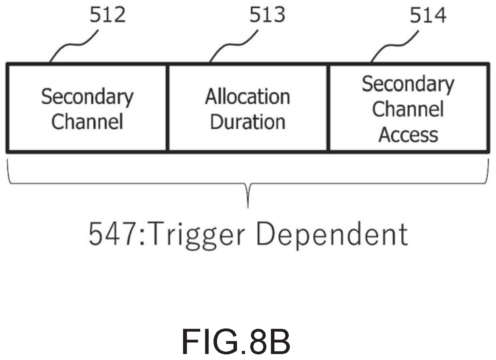

Trigger Dependent 547 according to the first embodiment of the present disclosure stores therein information regarding secondary channel access. Fig. 8B illustrates a configuration of Trigger Dependent 547 according to the first embodiment of the present disclosure. Trigger Dependent 547 includes Secondary Channel 512, Allocation Duration 513, and Secondary Channel Access 514.

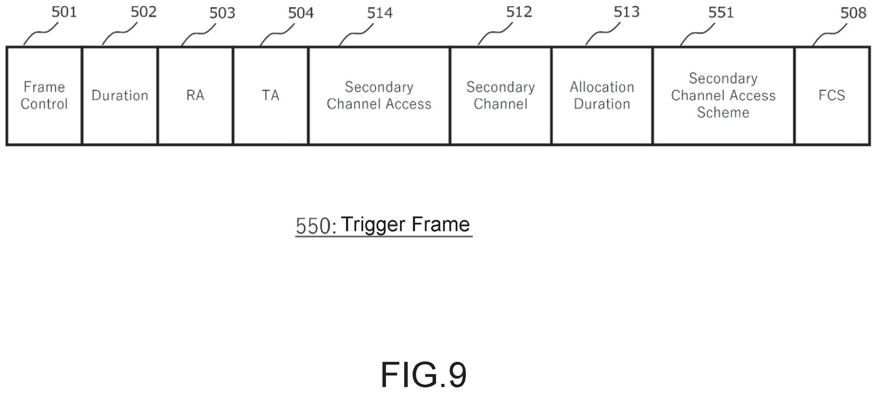

Fig. 6A and the others each illustrate an example in which information regarding secondary channel access is included in the MU-RTS TXS trigger signal 401. The information regarding secondary channel access may be transmitted using a trigger frame that is different from the MU-RTS TXS trigger signal 401. Fig. 9 illustrates a format of a trigger frame 550 that includes information regarding secondary channel access.

The trigger frame 550 includes Frame Control 501, Duration 502, RA 503, TA 504, Secondary Channel Access 514, Allocation Duration 513, Secondary Channel 512, Secondary Channel Access Scheme 551, and FCS 508. Secondary Channel Access Scheme 551 stores therein information similar to the secondary channel access scheme described with reference to Fig. 6A. RA 503 illustrated in Fig. 9 stores therein a MAC address of an STA when a non-AP MLD that performs secondary channel access is specified, and stores therein a broadcast address when the non-AP MLD that performs secondary channel access is not specified.

For example, after the CCA 422 illustrated in Fig. 5, the AP MLD 100 transmits the trigger frame 550 to a non-AP MLD (for example, the non-AP MLD 1) that performs secondary channel access. The non-AP MLD 1 receives the trigger frame 550, and performs secondary channel access on the basis of Secondary Channel Access 514, as in the case of Fig. 6B. Note that the non-AP MLD 1 can also perform P2P communication using a primary channel on the basis of the MU-RTS TXS trigger signal 401, as in the example described with reference to Fig. 6A. When the trigger frame 550 is used, a normal MU-RTS TXS trigger signal may be used as the MU-RTS TXS trigger signal 401. Further, herein, the trigger frame 550 is referred to as a second signal.

As described above, the information processing apparatus according to the first embodiment of the present disclosure enables secondary channel access in which wireless communication is performed using a band that includes at least one secondary channel. The secondary channel access makes it possible to cause a certain non-AP MLD to occupy a secondary channel when another non-AP MLD is occupying a primary channel, the secondary channel being a channel that is not occupied by the other non-AP MLD. This results in making the secondary channel active. This makes it possible to use the secondary channel more efficiently, compared to when the secondary channel access is not used.

### (Second Embodiment)

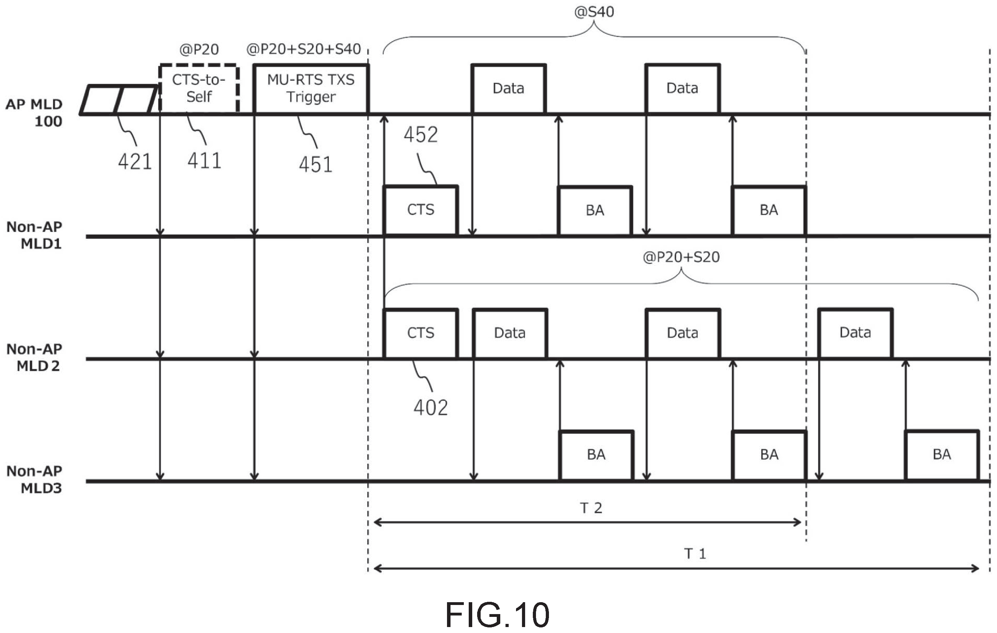

Fig. 10 is a diagram of a sequence of secondary channel access according to a second embodiment of the present disclosure. An MU-RTS TXS trigger signal (the first signal) 451 illustrated in Fig. 10 is different from the MU-RTS TXS trigger signal 401 illustrated in Fig. 5 in that channels are secured for not only a band (P20 + S20) used for P2P communication but also a band (S40) used for secondary channel access. This makes it possible to omit the CCA 422 provided to acquire a right to transmission on S40.

The MU-RTS TXS trigger signal 451 is transmitted on channels (P20 + S20 + S40) secured using the MU-RTS TXS trigger signal 451. The AP MLD 100 transmits the MU-RTS TXS trigger signal 451 to the non-AP MLD 1 performing secondary channel access and to at least one of the non-AP MLDs 2 and 3 performing P2P communication. Note that the AP MLD 100 may transmit the MU-RTS TXS trigger signal 451 to, for example, all of the subordinate non-AP MLDs.

When the non-AP MLD 2/3 receives the MU-RTS TXS trigger signal 451, the non-AP MLD 2/3 transmits the CTS signal 402 to the AP MLD 100 using P20 and S20, which correspond to a band used to perform P2P communication. Further, when the non-AP MLD 1 receives the MU-RTS TXS trigger signal 451, the non-AP MLD 1 transmits a CTS signal 452 to the AP MLD 100 using S40, which corresponds to a band used to perform secondary channel access.

The second embodiment of the present disclosure makes it possible to omit the CCA 422. This makes it possible to omit a process of detecting a signal with PIFS or a back-off procedure with respect to S40, and to shorten the time taken before the non-AP MLD 1 starts performing wireless communication using secondary channel access.

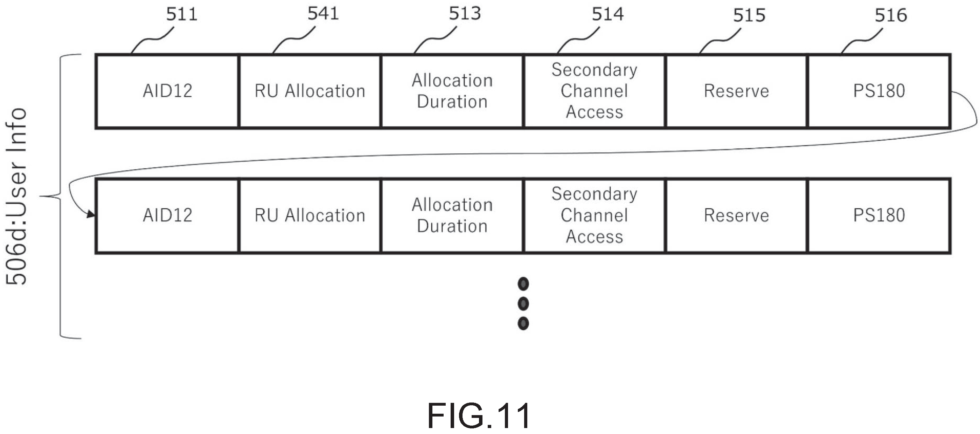

Fig. 11 illustrates a configuration of User Info 506d according to the second embodiment of the present disclosure. Pieces of individual information of a plurality of pieces of individual information in User Info 506d each include Identifier 511, Resource Unit Allocation Information 541, Allocation Duration 513, Secondary Channel Access 514, Secured Field 515, and Extension Field 516.

Resource Unit Allocation Information 541 illustrated in Fig. 11 is used to specify, from among a band secured using the MU-RTS TXS trigger signal 451, a band to be allocated to the non-AP MLD 2/3 performing P2P communication, and a band to be allocated to the non-AP MLD 1 performing secondary channel access. Note that Extension Field 516 illustrated in Fig. 11 stores therein a portion of the RU allocation.

In Fig. 10, from among channels secured using the MU-RTS TXS trigger signal 451, "P20 + S20" is allocated to the non-AP MLDs 2 and 3, and S40 is allocated to the non-AP MLD 1. However, the present disclosure is not limited thereto. The MU-RTS TXS trigger signal 451 makes it possible to discretionarily set a band to be allocated to the non-AP MLD 1/2/3, using Resource Unit Allocation Information 541.

The MU-RTS TXS trigger signal 451 is not limited to the example illustrated in Fig. 11, and one of the formats illustrated in Figs. 6A to 8B may be used as the MU-RTS TXS trigger signal 451. Further, the information regarding secondary channel access may be transmitted using the trigger frame 550 illustrated in Fig. 9.

As described above, the MU-RTS TXS trigger signal 451 according to the second embodiment of the present disclosure is used to secure channels for a band used to perform P2P communication and a band used to perform secondary channel access. This makes it possible to omit the CCA 422, and to shorten the time taken before the non-AP MLD 1 starts performing wireless communication using secondary channel access.

### <Example of Configuration of Computer>

The series of processes described above can be performed using hardware or software. When the series of processes is performed using software, a program included in the software is installed from a program recording medium on, for example, a computer incorporated into dedicated hardware or a general-purpose personal computer.

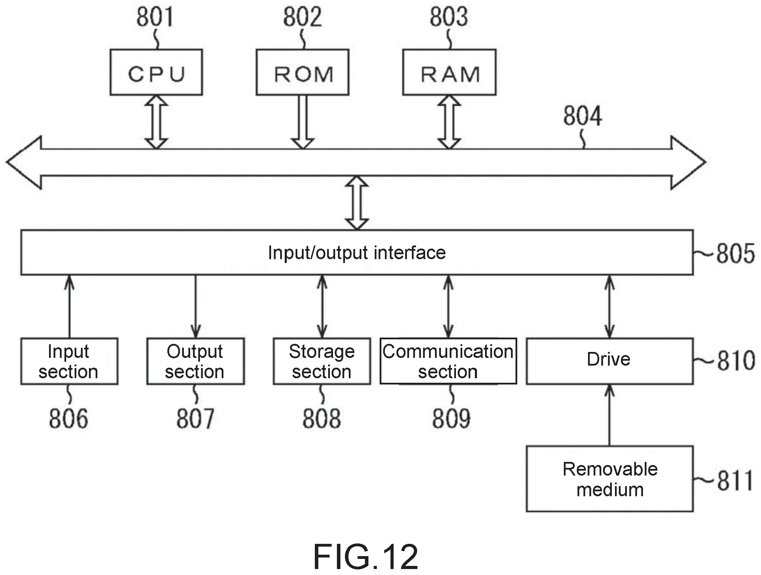

Fig. 12 is a block diagram of an example of a configuration of hardware of a computer that performs the series of processes described above using a program.

A central processing unit (CPU) 801, a read only memory (ROM) 802, and a random access memory (RAM) 803 are connected to each other through a bus 804.

Further, an input/output interface 805 is connected to the bus 804. An input section 806 that includes, for example, a keyboard and a mouse, and an output section 807 that includes, for example, a display and a speaker are connected to the input/output interface 805. Further, a storage section 808 that includes, for example, a hard disk and a nonvolatile memory, a communication section 809 that includes, for example, a network interface, and a drive 810 that drives a removable medium 811 are connected to the input/output interface 805.

In a computer having the configuration described above, the series of processes described above is performed by the CPU 801 loading, for example, a program stored in the storage section 808 into the RAM 803 and executing the program via the input/output interface 805 and the bus 804.

For example, the program executed by the CPU 801 is provided by being recorded in the removable medium 811 or provided via a wired or wireless transmission medium such as a local area network, the Internet, or digital broadcasting, and the provided program is installed on the storage section 808.

Note that the program executed by the computer may be a program in which processes are chronologically performed in the order of the description herein, or may be a program in which processes are performed in parallel or a process is performed at a necessary timing such as a timing of calling.

### <Application Examples>

The present technology can be applied to various products. For example, the wireless communication apparatus 100 illustrated in Fig. 2 and the wireless communication apparatus 1 illustrated in Fig. 3 may each be implemented as a mobile terminal such as a smartphone, a tablet personal computer (PC), a laptop, a portable game terminal, or a digital camera; a fixed terminal such as a television receiver, a printer, a digital scanner, or a network storage; or an in-vehicle terminal such as a car navigation apparatus. Furthermore, the wireless communication apparatus 100 and the wireless communication apparatus 1 may each be implemented as a machine-to-machine communication (M2M) terminal such as a smart meter, a vending machine, a remote monitoring apparatus, or a point-of-sale (POS) terminal. Moreover, the wireless communication apparatus 100 and the wireless communication apparatus 1 may each be a wireless communication module (such as an integrated circuit module formed using one die) included in a corresponding one of these terminals.

On the other hand, for example, the wireless communication apparatus 100 and the wireless communication apparatus 1 may each be implemented as a wireless LAN AP (a wireless base station) that includes or does not include a router function. Further, the communication apparatus 100 and the wireless communication apparatus 1 may each be implemented as a mobile wireless LAN router. Furthermore, the wireless communication apparatus 100 and the wireless communication apparatus 1 may each be a wireless communication module (such as an integrated circuit module formed using one die) included in the apparatus.

### <Example of Configuration of Smartphone>

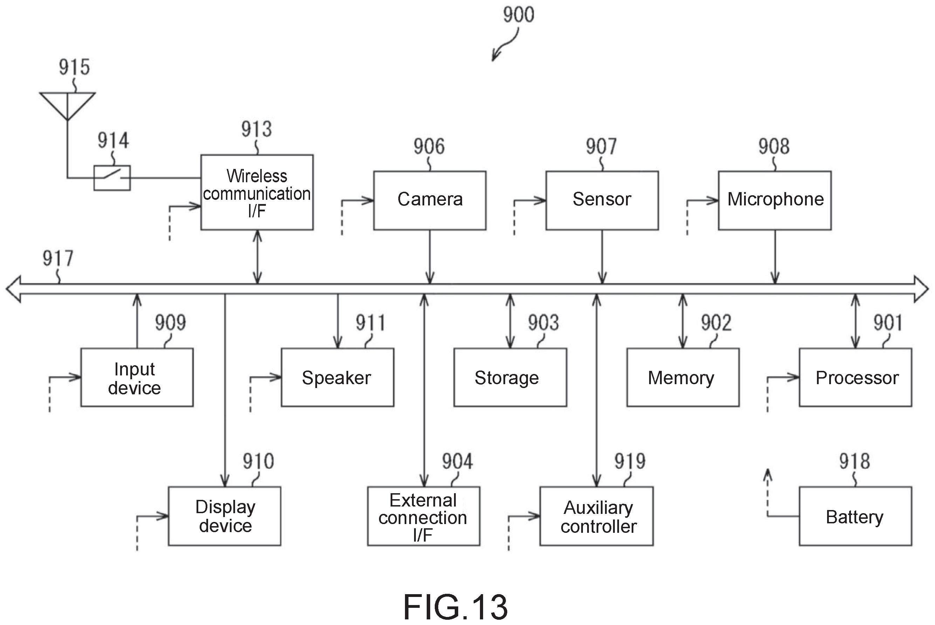

Fig. 13 is a block diagram of an example of a schematic configuration of a smartphone to which the present technology is applied.

A smartphone 900 includes a processor 901, a memory 902, a storage 903, an external connection interface 904, a camera 906, a sensor 907, a microphone 908, an input device 909, and a display device 910. Furthermore, the smartphone 900 includes a speaker 911, a wireless communication interface 913, an antenna switch 914, an antenna 915, a bus 917, a battery 918, and an auxiliary controller 919.

The processor 901 may be, for example, a CPU or a system on chip (SoC), and restricts functions of an application layer and other layers of the smartphone 900.

The memory 902 includes a RAM and a ROM, and stores therein a program that is executed by the processor 901, and data.

The storage 903 includes a storage medium such as a semiconductor memory or a hard disk.

The external connection interface 904 is an interface used to connect an external device such as a memory card or a Universal Serial Bus (USB) device to the smartphone 900.

The camera 906 includes, for example, a charge-coupled device (CCD) or complementary metal-oxide semiconductor (CMOS) imaging element, and generates a captured image.

The sensor 907 includes a sensor group such as a positioning sensor, a gyroscope, a geomagnetic sensor, and an acceleration sensor.

The microphone 908 converts, into an audio signal, sound input to the smartphone 900.

The input device 909 includes, for example, a touch sensor that detects touch on a screen of the display device 910, a keypad, a keyboard, a button, or a switch, and receives an operation performed by a user or information input by the user.

The display device 910 includes a screen such as a liquid crystal display (LCD) or an organic light-emitting diode (OLED) display, and converts, into sound, an audio signal output by the smartphone 900.

The wireless communication interface 913 supports at least one of wireless LAN standards such as IEEE 802.11a, 11b, 11g, 11ac, 11ad, 11ax, 11ay, 11be, and 11bn, and performs wireless communication.

The wireless communication interface 913 communicates with other apparatuses through a wireless LAN AP in an infrastructure mode. Further, the wireless communication interface 913 directly communicates with other apparatuses in an ad hoc mode or a direct communication mode such as Wi-Fi Direct.

Note that, in Wi-Fi Direct, one of two terminals operates as an AP but communication is directly performed between the terminals, which is different from the ad hoc mode.

Typically, the wireless communication interface 913 includes, for example, a baseband processor, a radio frequency (RF) circuit, and a power amplifier. The wireless communication interface 913 may be a one-chip module in which a memory that stores therein a communication control program, a processor that executes the program, and related circuits are integrated.

In addition to the wireless LAN scheme, the wireless communication interface 913 may support other types of wireless communication schemes such as a near field communication scheme, a proximity wireless communication scheme, and a cellular communication scheme.

The antenna switch 914 switches a connection destination of the antenna 915 between circuits of a plurality of circuits (such as circuits for different wireless communication schemes) included in the wireless communication interface 913.

The antenna 915 includes a single antenna element or a plurality of antenna elements (such as a plurality of the antenna elements included in a multiple-input multiple-output (MIMO) antenna), and is used for transmission and reception of a radio signal through the wireless communication interface 913.

Note that the smartphone 900 is not limited to the example illustrated in Fig. 13, and may include a plurality of antennas (such as an antenna for wireless LAN and an antenna of a proximity wireless communication scheme). In this case, the antenna switch 914 may be omitted from the configuration of the smartphone 900.

The processor 901, the memory 902, the storage 903, the external connection interface 904, the camera 906, the sensor 907, the microphone 908, the input device 909, the display device 910, the speaker 911, the wireless communication interface 913, and the auxiliary controller 919 are connected to each other through the bus 917.

The battery 918 supplies power to each block of the smartphone 900 illustrated in Fig. 13 through a power supply line partially indicated using a broken line in the figure. The auxiliary controller 919 operates a minimum necessary function of the smartphone 900 in, for example, a sleep mode.

In the smartphone 900 illustrated in Fig. 13, for example, the wireless communication apparatus 100 illustrated in Fig. 2 and the wireless communication apparatus 1 illustrated in Fig. 3 may each be implemented in the wireless communication interface 913. Further, at least a portion of these functions may be implemented in the processor 901 or the auxiliary controller 919.

Note that the smartphone 900 may operate as a wireless AP (a software AP) when the processor 901 executes an AP function at an application level. Further, the wireless communication interface 913 may include the wireless AP function.

Furthermore, the smartphone 900 may include a biometric authentication section (fingerprint authentication, palm-shape authentication, voice authentication, blood vessel authentication, face authentication, iris authentication, and retina authentication). In this case, the wireless communication interface 913 in which the wireless communication apparatus 100 illustrated in Fig. 2 or the wireless communication apparatus 1 illustrated in Fig. 3 is implemented is configured to receive power supply from the same battery 918 as at least one of the display device 910, the speaker 911, or the biometric authentication section.

Moreover, in the smartphone 900, information is displayed using at least one of the display device 910 or the speaker 911 on the basis of communication performed with an external apparatus using the wireless communication interface 913. In this case, information related to the present technology may be output as the information from at least one of the display device 910 or the speaker 911.

### <Example of Configuration of In-vehicle Apparatus>

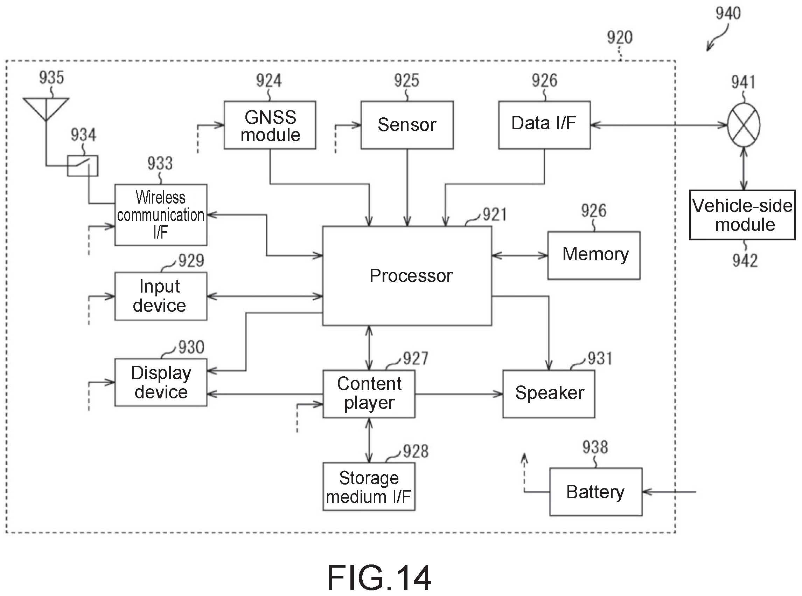

Fig. 14 is a block diagram of an example of a schematic configuration of an in-vehicle apparatus 920 to which the present technology is applied.

The in-vehicle apparatus 920 includes a processor 921, a memory 922, a global navigation satellite system (GNSS) module 924, a sensor 925, a data interface 926, a content player 927, and a storage medium interface 928. Further, the in-vehicle apparatus 920 includes an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the in-vehicle apparatus 920. Further, the processor 921 can also control a drive system of a vehicle, such as a brake, an accelerator, or a steering, on the basis of information obtained through communication based on the present technology.

The memory 922 includes a RAM and a ROM, and stores therein a program that is executed by the processor 921, and data.

The GNSS module 924 measures a location (for example, latitude, longitude, and altitude) of the in-vehicle apparatus 920 using a GNSS signal received from a GNSS satellite.

The sensor 925 includes a sensor group such as a gyroscope, a geomagnetic sensor, and an atmospheric-pressure sensor.

The data interface 926 is connected to an in-vehicle network 941 through, for example, a terminal (not illustrated), and acquires data, such as in-vehicle data, that is generated on the vehicle side.

The content player 927 plays back content stored in a storage medium (such as a CD or a DVD) inserted into the storage medium interface 928.

The input device 929 includes, for example, a touch sensor that detects touch on a screen of the display device 930, a button, or a switch, and receives an operation performed by the user or information input by the user.

The display device 930 includes a screen such as an LCD or an OLED display, and displays thereon an image for the navigation function or for content to be played back.

The speaker 931 outputs sound for the navigation function or for the content to be played back.

Note that, in the in-vehicle apparatus 920, the navigation function and the function of the content player 927 are optional. The navigation function and the content player 927 may be excluded from the configuration of the in-vehicle apparatus 920.

The wireless communication interface 933 supports at least one of the wireless LAN standards such as IEEE 802.11a, 11b, 11g, 11n, 11ac, 11ad, 11ax, 11ay, and 11be, and performs wireless communication. The wireless communication interface 933 communicates with other apparatuses through a wireless LAN AP in the infrastructure mode. Further, the wireless communication interface 933 directly communicates with other apparatuses in the ad hoc mode or the direct communication mode such as Wi-Fi Direct.

Typically, the wireless communication interface 933 includes, for example, a baseband processor, an RF circuit, and a power amplifier. The wireless communication interface 933 may be a one-chip module in which a memory that stores therein a communication control program, and a processor that executes the program or related circuits are integrated. In addition to the wireless LAN scheme, the wireless communication interface 933 may support other types of wireless communication schemes such as a near field communication scheme, a proximity wireless communication scheme, and a cellular communication scheme.

The antenna switch 934 switches a connection destination of the antenna 935 between circuits of a plurality of circuits included in the wireless communication interface 933.

The antenna 935 includes a single antenna element or a plurality of antenna elements, and is used for transmission and reception of a radio signal through the wireless communication interface 933.

Note that the in-vehicle apparatus 920 is not limited to the example in Fig. 14, and may include a plurality of the antennas 935. In this case, the antenna switch 934 may be omitted from the configuration of the in-vehicle apparatus 920.

The battery 938 through a power supply line partially indicated using a broken line in the figure, in the in-vehicle apparatus 920 illustrated in Fig. 14, for example, the wireless communication apparatus 100 illustrated in Fig. 2 and the wireless communication apparatus 1 illustrated in Fig. 3 may each be implemented in the wireless communication interface 933. Further, at least a portion of these functions may be implemented in the processor 921.

Further, the wireless communication interface 933 may operate as the wireless communication apparatus 100 or wireless communication apparatus 1 described above and provide wireless connection to a terminal of the user in the vehicle.

Furthermore, the present technology may be implemented as an in-vehicle system (or vehicle) 940 that includes at least one block of the in-vehicle apparatus 920 described above, the in-vehicle network 941, and a vehicle-side module 942. The vehicle-side module 942 generates vehicle-side data such as a vehicle speed, a rotation speed of an engine, or failure information, and outputs the generated data to the in-vehicle network 941.

### <Example of Configuration of Wireless AP>

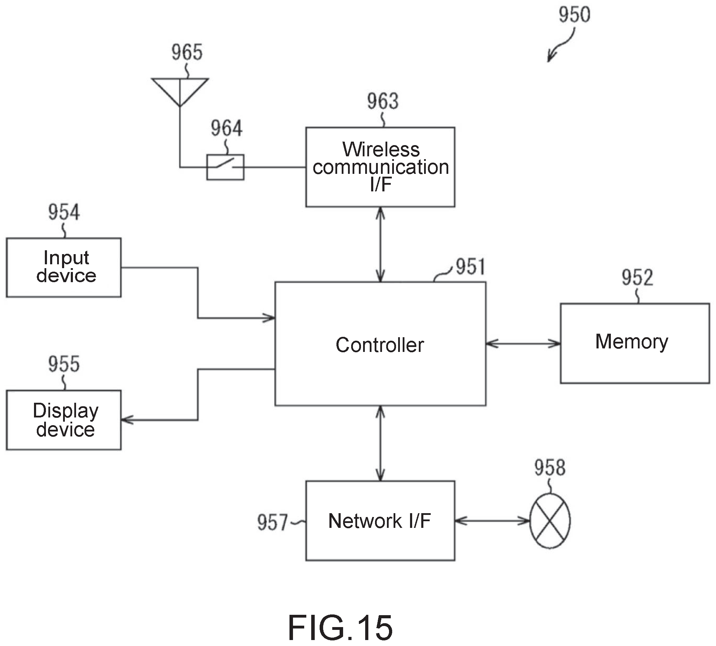

Fig. 15 is a block diagram of an example of a schematic configuration of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and operates various functions (such as access restriction, routing, encryption, firewall, and log management) of the Internet protocol (IP) layer and higher layers of the wireless AP 950.

The memory 952 includes a RAM and a ROM, and stores therein a program that is executed by the controller 951, and various control information (such as a terminal list, a routing table, an encryption key, a security setting, and a log).

The input device 954 includes, for example, a button and a switch, and receives an operation performed by a user.

The display device 955 includes, for example, an LED lamp, and displays thereon an operation status of the wireless AP 950.

The network interface 957 is a wired communication interface used to connect the wireless AP 950 to a wired communication network 958. The network interface 957 may include a plurality of connection terminals. The wired communication network 958 may be a LAN such as Ethernet (registered trademark), or may be a wide area network (WAN).

The wireless communication interface 963 supports at least one of the wireless LAN standards such as IEEE 802.11a, 11b, 11g, 11n, 11ac, 11ad, 11ax, 11ay, and 11be, and provides wireless connection as an AP for a nearby terminal.

Typically, the wireless communication interface 963 includes, for example, a baseband processor, an RF circuit, and a power amplifier.

The wireless communication interface 963 may be a one-chip module in which a memory that stores therein a communication control program, and a processor that executes the program or related circuits are integrated.

The antenna switch 964 switches a connection destination of the antenna 965 between circuits of a plurality of circuits included in the wireless communication interface 963, and the antenna 965 includes a single antenna element or a plurality of antenna elements, and is used for transmission and reception of a radio signal through the wireless communication interface 963.

In the wireless AP 950 illustrated in Fig. 15, for example, each of the wireless communication apparatus 100 illustrated in Fig. 2 and the wireless communication apparatus 1 illustrated in Fig. 3 may also be implemented in the wireless communication interface 963. Further, at least a portion of these functions may be implemented in the controller 951.

Note that the embodiments described above are examples for implementing the present technology, and there is a correspondence relationship between the matter in the embodiments and the claimed invention-specifying matter. Likewise, there is a correspondence relationship between the claimed invention-specifying matter and the matter in the embodiments of the present technology when those are denoted by the same name. However, the present technology is not limited to the embodiments, and can be implemented by various modifications being made to the embodiments without departing from the scope of the present technology.

Further, the processing procedures described in the embodiments described above may be considered a method including a series of the procedures, or may be considered a program used to cause this computer to execute the series of the procedures, or a recording medium that stores therein the program.

For example, a compact disc (CD), a MiniDisc (MD), a digital versatile disc (DVD), a memory card, or a Blu-ray (registered trademark) Disc can be used as this recording medium.

Note that the system as used herein refers to a collection of a plurality of components (such as apparatuses and modules (parts)) and it does not matter whether all of the components are in a single housing. Thus, a plurality of apparatuses accommodated in separate housings and connected to one another via a network, and a single apparatus in which a plurality of modules is accommodated in a single housing are both systems.

Further, the effects described herein are not limitative but are merely illustrative, and other effects may be provided.

The embodiments of the present technology are not limited to the examples described above, and various modifications may be made thereto without departing from the scope of the present technology.

For example, the present technology may have a configuration of cloud computing in which a single function is shared to be cooperatively processed by a plurality of apparatuses via a network.

Further, the respective steps described using the flowcharts described above may be performed by a single apparatus, or may be shared to be performed by a plurality of apparatuses.

Furthermore, when a single step includes a plurality of processes, the plurality of processes included in the single step may be performed by a single apparatus, or may be shared to be performed by a plurality of apparatuses.

Note that the present technology may take the following configurations.

### [Appendix]

[1] An information processing apparatus, including
   a control section that controls a communication section that performs communication on at least one of a first channel or a second channel, the first channel being used to perform wireless communication, the second channel being used by being bundled with the first channel in order to extend a band used for the wireless communication,
   in a state in which a right to transmission on the first channel that is acquired by a first wireless communication apparatus that acquires the right to transmission on the first channel and a right to transmission on the second channel, is shared by a second wireless communication apparatus, the control section performing control to perform wireless communication with the first wireless communication apparatus using the second channel in response to receiving first information used to give an instruction to perform communication on the basis of the right to transmission on the second channel.
[2] The information processing apparatus according to [1], in which
   in response to receiving second information used to report that the right to transmission on the first channel that is acquired by the first wireless communication apparatus is shared, the control section performs wireless communication with a third wireless communication apparatus or the second wireless communication apparatus using the first channel, the third wireless communication apparatus being different from the first wireless communication apparatus.
[3] The information processing apparatus according to [2], in which
   the first wireless communication apparatus controls a target wireless communication apparatus, and
   the control section performs control
      to detect information destined for the target wireless communication apparatus in a first signal received from the first wireless communication apparatus,
      to perform wireless communication using the second channel when the detected information is the first information, and
      to perform wireless communication using the first channel when the detected information is the second information.
[4] The information processing apparatus according to [3], in which
   the second channel includes a third channel and a fourth channel,
   the first signal is transmitted in a band including the first channel and the third channel, and
   the control section performs control
      to perform, when the first signal includes the second information, the wireless communication with the third wireless communication apparatus or the second wireless communication apparatus in the band in which the first signal is received, and
      to perform, when the first signal includes the first information, the wireless communication with the first wireless communication apparatus on the fourth channel.
[5] The information processing apparatus according to [3], in which
   the second channel include a third channel and a fourth channel,
   the first signal is transmitted in a band that includes at least the first channel, the third channel, and the fourth channel, and
   the control section performs control
      to perform wireless communication with the first wireless communication apparatus using the fourth channel when the first signal includes the first information, and
      to perform the wireless communication with the third wireless communication apparatus or the second wireless communication apparatus on the basis of the first channel and the third channel when the first signal includes the second information.
[6] The information processing apparatus according to [4] or [5], in which
   the first signal includes individual fields each storing therein individual information for each one of a plurality of wireless communication apparatuses including the second wireless communication apparatus and the target wireless communication apparatus, and
   the control section detects information destined for the target wireless communication apparatus in the individual field for the target wireless communication apparatus.
[7] The information processing apparatus according to [6], in which
   the individual information includes information regarding a period of time for which the second channel is allowed to be used, and information indicating whether a wireless communication apparatus that corresponds to the individual information is instructed to use the second channel.
[8] The information processing apparatus according to [6] or [7], in which
   the individual information includes information regarding uplink communication performed by the wireless communication apparatus corresponding to the individual information.
[9] The information processing apparatus according to [5], in which
   the first signal includes individual information for each one of a plurality of wireless communication apparatuses including the second wireless communication apparatus and the target wireless communication apparatus,
   the individual information for each of the plurality of wireless communication apparatuses includes an allocation number that indicates a band to be allocated to the wireless communication apparatus corresponding to the individual information, the indicated band being included in the band in which the first signal is transmitted, and
   the control section performs control
      to specify the fourth channel on the basis of the allocation number when the individual information corresponding to the target wireless communication apparatus includes the first information, and
      to specify at least one of the first channel or the third channel on the basis of the allocation number when the individual information corresponding to the target wireless communication apparatus includes the second information.
[10] The information processing apparatus according to any one of [3] to [9], in which
   the first signal includes an identification number used by the target wireless communication apparatus to identify the first signal as a signal used to give an instruction to perform communication on the basis of the right to transmission on the second channel, and
   the control section searches for the first information in the first signal when the identification number is included.
[11] The information processing apparatus according to any one of [6] to [10], in which
   the first signal is a multi-user request to send transmission opportunity sharing trigger (MU-RTS TXS trigger) signal that includes the individual information in User Info.
[12] The information processing apparatus according to [2], in which
   the control section performs control to perform wireless communication using the first channel when a first signal is transmitted by the first wireless communication apparatus and when the first signal includes the second information, and
   the control section performs control to perform wireless communication using the second channel when a second signal is transmitted by the first wireless communication apparatus and when the second signal includes the first information.
[13] The information processing apparatus according to any one of [4] to [12], in which
   the first information includes band information regarding the fourth channel, and
   the control section performs control to perform wireless communication using the fourth channel on the basis of the band information regarding the fourth channel.
[14] The information processing apparatus according to any one of [6] to [11], in which
   when the individual information includes the first information, the first information includes band information regarding the fourth channel,
   when the individual information includes the second information, the second information includes an allocation number that indicates a band to be allocated to the wireless communication apparatus corresponding to the individual information, the indicated band being included in the band in which the first signal is transmitted,
   the control section performs control to perform wireless communication using the fourth channel on the basis of the band information regarding the fourth channel when the individual information includes the band information regarding the fourth channel, and
   the control section performs control to perform wireless communication using the first channel and the third channel on the basis of the allocation number when the individual information includes the allocation number.
[15] The information processing apparatus according to [13] or [14], in which
   the band information regarding the fourth channel is one of an identifier determined in advance, an operating class, a channel set, and a channel center frequency index, or a center frequency and a bandwidth of the fourth channel.
[16] The information processing apparatus according to any one of [1] to [15], in which
   the first channel is a primary channel, and
   the second channel is a secondary channel.
[17] The information processing apparatus according to any one of [1] to [16], in which
   the first channel and the second channel are channels successive in a frequency domain, or channels separated from each other in the frequency domain.
[18] The information processing apparatus according to any one of [1] to [17], in which
   in a state in which the first channel is shared by the second wireless communication apparatus for a first period of time, the control section performs control to perform wireless communication for a second period of time using the second channel in response to receiving the first information, the second period of time being a portion of the first period of time or the same period of time as the first period of time.
[19] An information processing method, including
   controlling communication performed on at least one of a first channel or a second channel, the first channel being used to perform wireless communication, the second channel being used by being bundled with the first channel in order to extend a band used for the wireless communication; and
   in a state in which a right to transmission on the first channel that is acquired by a first wireless communication apparatus that acquires the right to transmission on the first channel and a right to transmission on the second channel, is shared by a second wireless communication apparatus, performing control to perform wireless communication with the first wireless communication apparatus using the second channel in response to receiving first information used to give an instruction to perform communication on the basis of the right to transmission on the second channel.
[20] A program that causes a process to be performed, the process including
   controlling communication performed on at least one of a first channel or a second channel, the first channel being used to perform wireless communication, the second channel being used by being bundled with the first channel in order to extend a band used for the wireless communication,
   in a state in which a right to transmission on the first channel that is acquired by a first wireless communication apparatus that acquires the right to transmission on the first channel and a right to transmission on the second channel, is shared by a second wireless communication apparatus, the controlling including performing control to perform wireless communication with the first wireless communication apparatus using the second channel in response to receiving first information used to give an instruction to perform communication on the basis of the right to transmission on the second channel.
[21] An information processing apparatus, including
   a control section that controls communication performed on a first channel and a second channel, the first channel being used to perform wireless communication, the second channel being used by being bundled with the first channel in order to extend a band used for the wireless communication,
   the control section performing control
      to acquire a right to transmission on the first channel and a right to transmission on the second channel,
      to share the right to transmission on the first channel with a second wireless communication apparatus, and
      to perform communication with a third wireless communication apparatus on the basis of the right to transmission on the second channel.
[22] The information processing apparatus according to [21], in which
   the control section performs control
   to acquire the right to transmission on the first channel, and
   to transmit, to the second wireless communication apparatus, second information used to report that the right to transmission on the first channel is shared.
[23] The information processing apparatus according to [22], in which
   the control section performs control to transmit a first signal to a plurality of wireless communication apparatuses including the second wireless communication apparatus and the third wireless communication apparatus, and
   the first signal includes
      first information used to instruct the third wireless communication apparatus to perform communication on the basis of the right to transmission on the second channel, and
      the second information.
[24] The information processing apparatus according to [23], in which
   the second channel includes a third channel and a fourth channel, and
   the control section performs control
      to transmit the first signal in a band including the first channel and the third channel,
      to perform the wireless communication with the third wireless communication apparatus on the fourth channel, and
      to share the right to transmission on the first channel and a right to transmission on the third channel with the second wireless communication apparatus.
[25] The information processing apparatus according to [23], in which
   the second channel includes a third channel and a fourth channel, and
   the control section performs control
      to transmit the first signal in a band including the first channel, the third channel, and the fourth channel,
      to perform the wireless communication with the third wireless communication apparatus on the fourth channel, and
      to share the right to transmission on the first channel and a right to transmission on the third channel with the second wireless communication apparatus.
[26] The information processing apparatus according to [24] or [25], in which
   the first signal includes individual fields each storing therein individual information for each of the plurality of wireless communication apparatuses, and
   the individual field includes the first information and the second information.
[27] The information processing apparatus according to [26], in which
   the individual information includes information regarding a period of time for which the second channel is allowed to be used, and information indicating whether a wireless communication apparatus that corresponds to the individual information is instructed to use the second channel.
[28] The information processing apparatus according to [26] or [27], in which
   the individual information includes information regarding uplink communication performed by the wireless communication apparatus corresponding to the individual information.
[29] The information processing apparatus according to [25], in which
   the first signal includes individual information for each of the plurality of wireless communication apparatuses,
   the individual information for each of the plurality of wireless communication apparatuses includes an allocation number that indicates a band to be allocated to the wireless communication apparatus corresponding to the individual information, the indicated band being included in the band in which the first signal is transmitted,
   the individual information corresponding to the third wireless communication apparatus includes the allocation number indicating that the fourth channel is allocated to the third wireless communication apparatus, and
   the individual information corresponding to the second wireless communication apparatus includes the allocation number indicating that at least one of the first channel or the third channel is allocated to the second wireless communication apparatus.
[30] The information processing apparatus according to any one of [23] to [29], in which
   the first signal includes an identification number used to cause the third wireless communication apparatus to identify the first signal as a signal used to give an instruction to perform communication on the basis of the right to transmission on the second channel, and to instruct the third wireless communication apparatus to search for the first information in the first signal.
[31] The information processing apparatus according to any one of [26] to [30], in which
   the first signal is a multi-user request to send transmission opportunity sharing trigger (MU-RTS TXS trigger) signal that includes the individual information in User Info.
[32] The information processing apparatus according to [22], in which
   the control section performs control
      to transmit a first signal that includes the second information, and
      to transmit a second signal to the third wireless communication apparatus after the transmission of the first signal, and
   the second signal includes first information used to instruct the third wireless communication apparatus to perform communication on the basis of the right to transmission on the second channel.
[33] The information processing apparatus according to any one of [24] to [32], in which
   the first information includes band information regarding the fourth channel caused to be used by the third wireless communication apparatus.
[34] The information processing apparatus according to any one of [26] to [31], in which
   the first information includes band information regarding the fourth channel caused to be used by the third wireless communication apparatus, and
   the second information includes an allocation number indicating that at least one of the first channel or the third channel is allocated to the second wireless communication apparatus.
[35] The information processing apparatus according to [33] or [34], in which
   the band information regarding the fourth channel is one of an identifier determined in advance, an operating class, a channel set, and a channel center frequency index, or a center frequency and a bandwidth of the fourth channel.
[36] The information processing apparatus according to any one of [21] to [35], in which
   the first channel is a primary channel, and
   the second channel is a secondary channel.
[37] The information processing apparatus according to any one of [21] to [36], in which
   the first channel and the second channel are channels successive in a frequency domain, or channels separated from each other in the frequency domain.
[38] The information processing apparatus according to any one of [21] to [37], in which
   the control section performs control
   to cause the first channel to be shared by the second wireless communication apparatus for a first period of time, and
   to cause the third wireless communication apparatus to perform wireless communication for a second period of time using the second channel, the second period of time being a portion of the first period of time or the same period of time as the first period of time.
[39] An information processing method, including
   controlling communication performed on a first channel and a second channel, the first channel being used to perform wireless communication, the second channel being used by being bundled with the first channel in order to extend a band used for the wireless communication; and
   performing control
      to acquire a right to transmission on the first channel and a right to transmission on the second channel,
      to share the right to transmission on the first channel with a second wireless communication apparatus, and
      to perform communication with a third wireless communication apparatus on the basis of the right to transmission on the second channel.
[40] A program that causes a process to be performed, the process including
   controlling communication performed on a first channel and a second channel, the first channel being used to perform wireless communication, the second channel being used by being bundled with the first channel in order to extend a band used for the wireless communication,
   the controlling the communication including performing control
      to acquire a right to transmission on the first channel and a right to transmission on the second channel,
      to share the right to transmission on the first channel with a second wireless communication apparatus, and
      to perform communication with a third wireless communication apparatus on the basis of the right to transmission on the second channel.

Aspects of the present disclosure are not limited to the embodiments described above, but also include various modifications that could be conceived by those skilled in the art. Effects provided by the present disclosure are also not limited to the contents described above. In other words, various additions, modifications, and partial deletions may be made without departing from conceptual idea and spirit of the present disclosure that are derived from contents defined by the claims and equivalents thereof.

### Reference Signs List

- 1, 2, 3, 100: wireless communication apparatus
- 11, 12: channel
- 110, 210: communication section
- 111, 211: communication control section
- 112, 212: communication storage section
- 113, 213: shared data processing section
- 121, 221: individual data processing section
- 122, 222: signal processing section
- 123, 223: wireless interface section
- 124, 224: amplification section
- 130, 230: control section
- 140, 240: storage section
- 150, 250: antenna
- 401, 451: MU-RTS TXS trigger signal
- 402, 452: CTS signal
- 411: CTS-to-self signal
- 501: Frame Control
- 502: Duration
- 503: RA
- 504: TA
- 505: Common Info
- 506, 506a, 506b, 506c, 506d: User Info
- 507: Padding
- 508: FCS
- 511: Identifier
- 512: Secondary Channel
- 513: Allocation Duration
- 514: Secondary Channel Access
- 515: Secured Field
- 516: Extension Field
- 521: Mode Specification
- 522: Trigger Dependent Common Info
- 531: RU Allocation/Secondary Channel
- 541: Resource Unit Allocation Information
- 542: Uplink Forward Error Correction
- 543: Uplink Modulation Encoding Scheme
- 544: Uplink DCM
- 545: SS Allocation/RA-RU Information
- 546: Uplink Received Power
- 547: Trigger Dependent
- 550: trigger frame
- 551: Secondary Channel Access Scheme

## Claims

1. An information processing apparatus, comprising
a control section that controls a communication section that performs communication on at least one of a first channel or a second channel, the first channel being used to perform wireless communication, the second channel being used by being bundled with the first channel in order to extend a band used for the wireless communication,
in a state in which a right to transmission on the first channel that is acquired by a first wireless communication apparatus that acquires the right to transmission on the first channel and a right to transmission on the second channel, is shared by a second wireless communication apparatus, the control section performing control to perform wireless communication with the first wireless communication apparatus using the second channel in response to receiving first information used to give an instruction to perform communication on a basis of the right to transmission on the second channel.

2. The information processing apparatus according to claim 1, wherein
in response to receiving second information used to report that the right to transmission on the first channel that is acquired by the first wireless communication apparatus is shared, the control section performs wireless communication with a third wireless communication apparatus or the second wireless communication apparatus using the first channel, the third wireless communication apparatus being different from the first wireless communication apparatus.

3. The information processing apparatus according to claim 2, wherein
the first wireless communication apparatus controls a target wireless communication apparatus, and
the control section performs control
to detect information destined for the target wireless communication apparatus in a first signal received from the first wireless communication apparatus,
to perform wireless communication using the second channel when the detected information is the first information, and
to perform wireless communication using the first channel when the detected information is the second information.

4. The information processing apparatus according to claim 3, wherein
the second channel includes a third channel and a fourth channel,
the first signal is transmitted in a band including the first channel and the third channel, and
the control section performs control
to perform, when the first signal includes the second information, the wireless communication with the third wireless communication apparatus or the second wireless communication apparatus in the band in which the first signal is received, and
to perform, when the first signal includes the first information, the wireless communication with the first wireless communication apparatus on the fourth channel.

5. The information processing apparatus according to claim 3, wherein
the second channel include a third channel and a fourth channel,
the first signal is transmitted in a band that includes at least the first channel, the third channel, and the fourth channel, and
the control section performs control
to perform wireless communication with the first wireless communication apparatus using the fourth channel when the first signal includes the first information, and
to perform the wireless communication with the third wireless communication apparatus or the second wireless communication apparatus on a basis of the first channel and the third channel when the first signal includes the second information.

6. The information processing apparatus according to claim 4, wherein
the first signal includes individual fields each storing therein individual information for each one of a plurality of wireless communication apparatuses including the second wireless communication apparatus and the target wireless communication apparatus, and
the control section detects information destined for the target wireless communication apparatus in the individual field for the target wireless communication apparatus.

7. The information processing apparatus according to claim 6, wherein
the individual information includes information regarding a period of time for which the second channel is allowed to be used, and information indicating whether a wireless communication apparatus that corresponds to the individual information is instructed to use the second channel.

8. The information processing apparatus according to claim 6, wherein
the individual information includes information regarding uplink communication performed by the wireless communication apparatus corresponding to the individual information.

9. The information processing apparatus according to claim 5, wherein
the first signal includes individual information for each one of a plurality of wireless communication apparatuses including the second wireless communication apparatus and the target wireless communication apparatus,
the individual information for each of the plurality of wireless communication apparatuses includes an allocation number that indicates a band to be allocated to the wireless communication apparatus corresponding to the individual information, the indicated band being included in the band in which the first signal is transmitted, and
the control section performs control
to specify the fourth channel on a basis of the allocation number when the individual information corresponding to the target wireless communication apparatus includes the first information, and
to specify at least one of the first channel or the third channel on the basis of the allocation number when the individual information corresponding to the target wireless communication apparatus includes the second information.

10. The information processing apparatus according to claim 3, wherein
the first signal includes an identification number used by the target wireless communication apparatus to identify the first signal as a signal used to give an instruction to perform communication on the basis of the right to transmission on the second channel, and
the control section searches for the first information in the first signal when the identification number is included.

11. The information processing apparatus according to claim 6, wherein
the first signal is a multi-user request to send transmission opportunity sharing trigger (MU-RTS TXS trigger) signal that includes the individual information in User Info.

12. The information processing apparatus according to claim 2, wherein
the control section performs control to perform wireless communication using the first channel when a first signal is transmitted by the first wireless communication apparatus and when the first signal includes the second information, and
the control section performs control to perform wireless communication using the second channel when a second signal is transmitted by the first wireless communication apparatus and when the second signal includes the first information.

13. The information processing apparatus according to claim 4, wherein
the first information includes band information regarding the fourth channel, and
the control section performs control to perform wireless communication using the fourth channel on a basis of the band information regarding the fourth channel.

14. The information processing apparatus according to claim 6, wherein
when the individual information includes the first information, the first information includes band information regarding the fourth channel,
when the individual information includes the second information, the second information includes an allocation number that indicates a band to be allocated to the wireless communication apparatus corresponding to the individual information, the indicated band being included in the band in which the first signal is transmitted,
the control section performs control to perform wireless communication using the fourth channel on a basis of the band information regarding the fourth channel when the individual information includes the band information regarding the fourth channel, and
the control section performs control to perform wireless communication using the first channel and the third channel on a basis of the allocation number when the individual information includes the allocation number.

15. The information processing apparatus according to claim 13, wherein
the band information regarding the fourth channel is one of an identifier determined in advance, an operating class, a channel set, and a channel center frequency index, or a center frequency and a bandwidth of the fourth channel.

16. The information processing apparatus according to claim 1, wherein
the first channel is a primary channel, and
the second channel is a secondary channel.

17. The information processing apparatus according to claim 1, wherein
the first channel and the second channel are channels successive in a frequency domain, or channels separated from each other in the frequency domain.

18. The information processing apparatus according to claim 1, wherein
in a state in which the first channel is shared by the second wireless communication apparatus for a first period of time, the control section performs control to perform wireless communication for a second period of time using the second channel in response to receiving the first information, the second period of time being a portion of the first period of time or the same period of time as the first period of time.

19. An information processing method, comprising
controlling communication performed on at least one of a first channel or a second channel, the first channel being used to perform wireless communication, the second channel being used by being bundled with the first channel in order to extend a band used for the wireless communication; and
in a state in which a right to transmission on the first channel that is acquired by a first wireless communication apparatus that acquires the right to transmission on the first channel and a right to transmission on the second channel, is shared by a second wireless communication apparatus, performing control to perform wireless communication with the first wireless communication apparatus using the second channel in response to receiving first information used to give an instruction to perform communication on a basis of the right to transmission on the second channel.

20. A program that causes a process to be performed, the process comprising
controlling communication performed on at least one of a first channel or a second channel, the first channel being used to perform wireless communication, the second channel being used by being bundled with the first channel in order to extend a band used for the wireless communication,
in a state in which a right to transmission on the first channel that is acquired by a first wireless communication apparatus that acquires the right to transmission on the first channel and a right to transmission on the second channel, is shared by a second wireless communication apparatus, the controlling including performing control to perform wireless communication with the first wireless communication apparatus using the second channel in response to receiving first information used to give an instruction to perform communication on a basis of the right to transmission on the second channel.
